# EUROPEAN PATENT APPLICATION

(11) **EP 2 333 456 A1**
(43) Date of publication of application: **15.06.2011**
(21) Application number: 09814261.5
(22) Date of filing: 14.09.2009
(51) Int. Cl.: F25B 13/00, F24F 11/02

(54) **ELECTROMAGNETIC INDUCTION HEATING UNIT AND AIR-CONDITIONING APPARATUS**

(30) Priority: 17.09.2008 JP 2008238747
(71) Applicant: Daikin Industries, Ltd., Osaka 530-8323 (JP)
(72) Inventor: WAKASHIMA, Masahiro, Sakai-shi Osaka 591-8511 (JP); ASADA, Satoshi, Sakai-shi Osaka 591-8511 (JP)
(74) Representative: HOFFMANN EITLE
(86) International application number: PCT/JP2009/004557
(87) International publication number: WO 2010/032416

(57) **Abstract**

An electromagnetic induction heating unit and air conditioning apparatus are provided whereby the responsiveness of temperature detection can be enhanced even when the temperature of the refrigerant tube varies sharply in electromagnetic induction heating. The electromagnetic induction heating unit (6) heats a refrigerant tube (F) whose external surface is composed of SUS tubing (F2), and the electromagnetic induction heating unit (6) is provided with a coil (68) and a fuse (15). The coil (68) is disposed in the vicinity of the refrigerant tube (F). The fuse (15) is in contact with the external surface of the refrigerant tube (F), and the surface of the fuse (15) in contact with the refrigerant tube (F) has substantially the same shape as the contacted portion of the external surface of the refrigerant tube (F).

## Description

### TECHNICAL FIELD

The present invention relates to an electromagnetic induction heating unit and to an air conditioning apparatus.

### BACKGROUND ART

In a refrigeration cycle, a radiator for releasing the heat of a refrigerant, a heater for imparting heat to the refrigerant, and other components are provided. The refrigerant circulated through the refrigeration cycle obtains heat by heat exchange with indoor air in an air-cooling operation cycle, and obtains heat by heat exchange with outdoor air in an air-warming operation cycle.

According to the refrigeration cycle for an air conditioner as described in Patent Document 1 (Japanese Unexamined Patent Application Publication No. 8-210720), a system is proposed in which heat is obtained not only from indoor air or outdoor air as described above, but the refrigerant obtains heat separately through the use of a refrigerant heating apparatus. In this refrigerant heating apparatus, a heat exchanger through which the refrigerant flows is heated by a burner, and heat is thereby imparted to the refrigerant that flows through the inside of the heat exchanger. Since a refrigerant heating apparatus is thus employed in the air conditioner, the refrigerant can be heated without limitations being imposed by such factors as the indoor or outdoor temperature in cases in which heat is required for the refrigerant.

### SUMMARY OF THE INVENTION

### <Problems to be Solved by the Invention>

An electromagnetic induction heating system as an electrical system may also be used as a refrigerant heating apparatus such as the one described above, instead of a burner or other heating system which uses fire. For example, by winding an electromagnetic induction coil around a refrigerant tube that includes a magnetic material, and supplying an electric current to the electromagnetic induction coil, the resultant magnetic flux causes heat evolution in the refrigerant tube. The heat evolution in the refrigerant tube can be used to heat the refrigerant.

However, in the case of supplying current to a coil to heat a refrigerant tube by electromagnetic induction, unlike the case of heating by a burner or the like, the temperature can vary sharply in a short time. There is therefore a risk that the current temperature of the refrigerant tube may be difficult to quickly assess.

The present invention was developed in view of the foregoing problems, and an object of the present invention is to provide an electromagnetic induction heating unit and air conditioning apparatus whereby the responsiveness of temperature detection can be enhanced even when the temperature of the refrigerant tube varies sharply in electromagnetic induction heating.

### <Means for Solving the Problems>

An electromagnetic induction heating unit according to a first aspect of the present invention is an electromagnetic induction heating unit for heating at least one of a refrigerant tube and a member which makes thermal contact with a refrigerant that flows through the refrigerant tube; and the electromagnetic induction heating unit comprises a coil and a tube temperature detector. The coil is disposed in the vicinity of the refrigerant tube. The tube temperature detector is in contact with an external surface of the refrigerant tube, and a surface of the tube temperature detector in contact with the refrigerant tube has substantially the same shape as a contacted portion of the external surface of the refrigerant tube. The term "refrigerant tube" herein includes portions constituting the inside surface, portions constituting the outside surface, and the portions positioned between the inside surface and the outside surface. In other words, a member for generating an eddy current by electromagnetic induction may constitute the external surface of the refrigerant tube or the inside surface of the refrigerant tube, or may be positioned between the external surface and the inside surface of the refrigerant tube. The "member which makes thermal contact with the refrigerant that flows through the refrigerant tube" includes, for example, a member disposed on the refrigerant passage in the tube so as to make direct contact with the refrigerant, a member disposed on the outside of the refrigerant tube, for heating the refrigerant tube, or the like. The "refrigerant tube" and the "member which makes thermal contact with a refrigerant that flows through the refrigerant tube" preferably include or are alloyed with a magnetic substance in at least a portion thereof. From the perspective of achieving efficient heating relative to power consumption, the magnetic substance is preferably a ferromagnetic substance.

In this electromagnetic induction heating unit, since the tube temperature detector is in contact with the external surface of the refrigerant tube, and the contacting surface of the tube temperature detector has substantially the same shape as the contacted portion of the external surface of the refrigerant tube, good contact between the tube temperature detector and the refrigerant tube can be ensured. The responsiveness of the detected temperature of the tube temperature detector can thereby be enhanced even when the temperature of the refrigerant tube varies sharply in electromagnetic induction heating.

An electromagnetic induction heating unit according to a second aspect of the present invention is the electromagnetic induction heating unit according to the first aspect of the present invention, wherein the coil is wound around at least a portion of the refrigerant tube.

In this electromagnetic induction heating unit, a portion of the magnetic flux generated by supplying a current to the coil can be directed along the direction in which the refrigerant tube extends. The efficiency of heating by electromagnetic induction can therefore be enhanced in a case in which the longitudinal direction of the magnetic substance included in the refrigerant tube and the axial direction of the refrigerant tube are substantially the same.

An electromagnetic induction heating unit according to a third aspect of the present invention is the electromagnetic induction heating unit according to the first or second aspect of the present invention, further comprising elastic members for elastically deforming and thereby creating a state in which a force is applied in the direction in which the tube temperature detector and the refrigerant tube approach each other.

In this electromagnetic induction heating unit, since the tube temperature detector and the refrigerant tube can be maintained in a state of more adequate contact with each other, the responsiveness of the detected temperature of the tube temperature detector can be further enhanced.

An electromagnetic induction heating unit according to a fourth aspect of the present invention is the electromagnetic induction heating unit according to any of the first through third aspects of the present invention, wherein the tube temperature detector has temperature detection wires for transmitting the detected temperature. The coil has coil extension wires extending in a direction away from the refrigerant tube, the coil extension wires being portions other than the portion of the coil that is disposed in the vicinity of the refrigerant tube. The temperature detection wires and the coil extension wires are disposed apart from each other in a direction in which the refrigerant tube extends. The boundary between high and low current includes cases in which 3-phase 200 V and higher, for example, is high current, and lower values are low current.

In this electromagnetic induction heating unit, the low-current temperature detection wires used for detecting temperature, and the high-current coil extension wires used for generating electromagnetic induction are disposed apart from each other in the direction in which the refrigerant tube extends. It is thereby possible to prevent contact or interference between low-current portion and high-current portion.

An electromagnetic induction heating unit according to a fifth aspect of the present invention is the electromagnetic induction heating unit according to the fourth aspect of the present invention, wherein the coil extension wires have a coil first portion which is a portion extending from one end of the coil, and a coil second portion which is a portion extending from an other end of the coil. A portion of the coil first portion and a portion of the coil second portion are brought together at a position in a vicinity of one side of the position of the coil in the direction in which the refrigerant tube extends.

In this electromagnetic induction heating unit, by bringing together the coil first portion and coil second portion in which a high-frequency current flows, the range of effects on peripheral members, components, and the like can be reduced in comparison with an arrangement in which the high-frequency current passes through at multiple locations.

An electromagnetic induction heating unit according to a sixth aspect of the present invention is the electromagnetic induction heating unit according to any of the first through fifth aspects of the present invention, further comprising a positioning part for fixing the relative position of the coil and the refrigerant tube. The positioning part has an insertion opening into which the tube temperature detector is inserted. The shape of the tube temperature detector as viewed in the insertion direction thereof is predetermined shape which is not the same at any rotation angle when rotated about the insertion direction as the axial direction. The insertion opening is shaped so as to conform to the outer edge of the predetermined shape.

In this electromagnetic induction heating unit, the tube temperature detector cannot be inserted through the insertion opening of the positioning part except at a predetermined insertion angle and insertion position. The tube temperature detector can therefore be prevented from being inserted in the wrong direction.

An electromagnetic induction heating unit according to a seventh aspect of the present invention is the electromagnetic induction heating unit according to any of the first through sixth aspects of the present invention, wherein the tube temperature detector has a thermistor for transmitting the detected temperature.

In this electromagnetic induction heating unit, since a thermistor is provided, the temperature of the refrigerant tube can be responsively and objectively assessed.

An electromagnetic induction heating unit according to an eighth aspect of the present invention is the electromagnetic induction heating unit according to the seventh aspect of the present invention further comprising a controller for at least controlling the amount of power fed to the coil on the basis of the temperature detected by the thermistor.

In this electromagnetic induction heating unit, since responsive and objective temperature data can be used in the control performed by the controllers to control the amount of power fed to the coil, the control of the amount of power fed to the coil can be enhanced.

An electromagnetic induction heating unit according to a ninth aspect of the present invention is the electromagnetic induction heating unit according to the seventh or eighth aspect of the present invention, wherein the thermistor is in contact with the external surface of the refrigerant tube at a point downstream from a center position in the width of the coil in the refrigerant flow direction of the refrigerant tube.

In this electromagnetic induction heating unit, since the refrigerant flows through the inside of the refrigerant tube in which heat is evolved by induction by the electrically powered coil, the refrigerant temperature tends to be higher on the downstream side than the upstream side. Since the thermistor in this arrangement is disposed on the downstream side of the portion of the refrigerant tube that is induction-heated by the coil, the degree to which the refrigerant is heated by the refrigerant tube, in which heat is evolved by induction heating, can be more easily assessed than in a case in which the thermistor is disposed on the upstream side. Excessive heating of the refrigerant that flows through the refrigerant tube can thereby be easily detected.

An electromagnetic induction heating unit according to a tenth aspect of the present invention is the electromagnetic induction heating unit according to the first through ninth aspects of the present invention, wherein the tube temperature detector has a temperature fuse for transmitting a signal when the detected temperature is equal to or higher than a predetermined temperature.

In this electromagnetic induction heating unit, since a temperature fuse is provided, it is possible to provide notification of an abnormal state when there is an abnormal rise in temperature.

An air conditioning apparatus according to an eleventh aspect of the present invention comprises the electromagnetic induction heating unit according to any of the first through tenth aspects of the present invention; and a refrigeration cycle that includes a portion for leading refrigerant to the refrigerant tube.

In this air conditioning apparatus, the responsiveness of the detected temperature of the tube temperature detector can be enhanced when the temperature of the refrigerant tube varies sharply in electromagnetic induction heating in a case in which the electromagnetic induction heating unit is provided to the air conditioning apparatus.

### <Advantageous Effects of the Invention>

In the electromagnetic induction heating unit according to the first aspect of the present invention, the responsiveness of the detected temperature of the tube temperature detector can be enhanced even when the temperature of the refrigerant tube varies sharply in electromagnetic induction heating.

In the electromagnetic induction heating unit according to the second aspect of the present invention, the efficiency of heating by electromagnetic induction can be enhanced in a case in which the longitudinal direction of the magnetic substance included in the refrigerant tube and the axial direction of the refrigerant tube are substantially the same.

In the electromagnetic induction heating unit according to the third aspect of the present invention, the responsiveness of the detected temperature of the tube temperature detector can be further enhanced.

In the electromagnetic induction heating unit according to the fourth aspect of the present invention, it is possible to prevent contact or interference between low-current portion and high-current portion.

In the electromagnetic induction heating unit according to the fifth aspect of the present invention, the range of effects on peripheral members, components, and the like can be reduced.

In the electromagnetic induction heating unit according to the sixth aspect of the present invention, the tube temperature detector can be prevented from being inserted in the wrong direction.

In the electromagnetic induction heating unit according to the seventh aspect of the present invention, since a thermistor is provided, the temperature of the refrigerant tube can be responsively and objectively assessed.

In the electromagnetic induction heating unit according to the eighth aspect of the present invention, the control of the amount of power fed to the coil can be enhanced.

In the electromagnetic induction heating unit according to the ninth aspect of the present invention, excessive heating of the refrigerant that flows through the refrigerant tube can be easily detected.

In the electromagnetic induction heating unit according to the tenth aspect of the present invention, it is possible to provide notification of an abnormal state when there is an abnormal rise in temperature.

In the air conditioning apparatus according to the eleventh aspect of the present invention, the responsiveness of the detected temperature of the tube temperature detector can be enhanced.

### BRIEF DESCRIPTION OF THE DRAWINGS

FIG. 1 is a refrigerant circuit diagram showing the air conditioning apparatus according to a first embodiment of the present invention.
FIG. 2 is a an external perspective view showing the front side of the outdoor unit.
FIG. 3 is a perspective view showing the internal arrangement configuration of the outdoor unit.
FIG. 4 is a perspective view showing the positional relationship between the outdoor heat exchanger and the bottom panel of the outdoor unit.
FIG. 5 is an external perspective view showing the back surface of the outdoor unit.
FIG. 6 is an external perspective view showing the electromagnetic induction heating unit.
FIG. 7 is a sectional view showing the configuration of the electromagnetic induction heating unit.
FIG. 8 is an external perspective view showing a state in which the screen cover is removed from the electromagnetic induction heating unit.
FIG. 9 is an external perspective view showing the bobbin main body on which the coil is wound.
FIG. 10 is a front view showing the bobbin main body.
FIG. 11 is a conceptual view showing the supply of power to the electromagnetic induction heating unit.
FIG. 12 is a bottom view showing a state in which the screen cover of the electromagnetic induction heating unit is removed.
FIG. 13 is a top view showing the portion positioned on the outside of the first bobbin lid.
FIG. 14 is a bottom view showing the portion positioned on the inside of the first bobbin lid.
FIG. 15 is an external perspective view showing the Thermistor.
FIG. 16 is an external perspective view showing the fuse.
FIG. 17 is a view showing the magnetic flux that occurs in a state in which the screen cover is absent.
FIG. 18 is a view showing the magnetic flux that occurs in a state in which the screen cover is provided.
FIG. 19 is a side view showing the bobbin main body with the coil wound thereon.
FIG. 20 is a top view showing the bobbin main body with the coil wound thereon.
FIG. 21 is a first perspective view showing the bobbin main body.
FIG. 22 is a second perspective view showing the bobbin main body.
FIG. 23 is a top view showing the bobbin main body.
FIG. 24 is a sectional view along line A-A of the bobbin main body.
FIG. 25 is a sectional view along line B-B of the bobbin main body.
FIG. 26 is a sectional view along line C-C of the bobbin main body.
FIG. 27 is a sectional view along line D-D of the bobbin main body.
FIG. 28 is a sectional view along line A-A of the first bobbin lid.
FIG. 29 is a sectional view along line B-B of the first bobbin lid.
FIG. 30 is a side view showing the first bobbin lid from the direction of the arrow C.
FIG. 31 is a side view showing the first bobbin lid from the direction of the arrow D.
FIG. 32 is a side view showing the first bobbin lid from the direction of the arrow E.
FIG. 33 is a sectional view along line F-F of the first bobbin lid.
FIG. 34 is a rough sectional view showing the vicinity of the lower end part of the electromagnetic induction heating unit.
FIG. 35 is a bottom view showing the second bobbin lid.
FIG. 36 is a view showing the overall configuration of the thermistor attachment spring.
FIG. 37 is a view showing the overall configuration of the fuse attachment spring.
FIG. 38 is a view showing the refrigerant tube according to another embodiment (B).
FIG. 39 is a view showing the refrigerant tube according to another embodiment (C).
FIG. 40 is a view showing an example of the arrangement of the coil and the refrigerant tube according to another embodiment (E).
FIG. 41 is a view showing an example of the arrangement of the bobbin lid according to another embodiment (E).
FIG. 42 is a view showing an example of the arrangement of the ferrite case according to another embodiment (E).

### DESCRIPTION OF EMBODIMENTS

The electromagnetic induction heating unit 6 and the air conditioning apparatus 1 provided therewith according to an embodiment of the present invention will be described below as examples with reference to the drawings.

### <11> Air Conditioning Apparatus 1

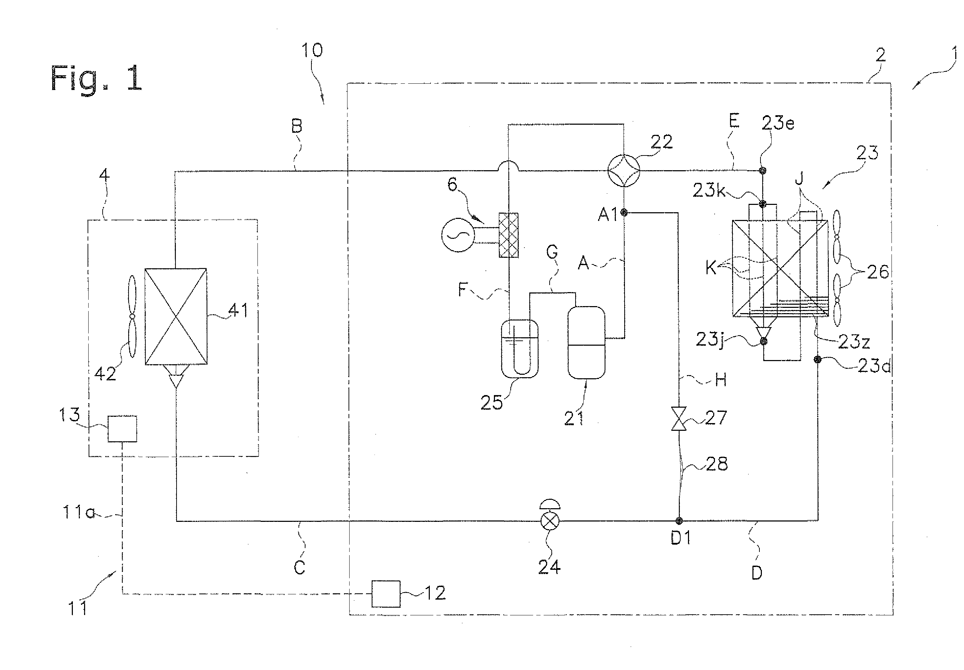

FIG. 1 is a refrigerant circuit diagram showing a refrigerant circuit 10 of the air conditioning apparatus 1.

In the air conditioning apparatus 1, an outdoor unit 2 as a heat source-side apparatus, and an indoor unit 4 as a usage-side apparatus are connected by a refrigerant tube, the air conditioning apparatus 1 performs air conditioning of a space in which a usage-side apparatus is placed, and the air conditioning apparatus 1 is provided with a compressor 21, a four-way switching valve 22, an outdoor heat exchanger 23, an outdoor motor-driven expansion valve 24, an accumulator 25, outdoor fans 26, an indoor heat exchanger 41, an indoor fan 42, a hot-gas bypass valve 27, a capillary tube 28, the electromagnetic induction heating unit 6, and other components.

The compressor 21, four-way switching valve 22, outdoor heat exchanger 23, outdoor motor-driven expansion valve 24, accumulator 25, outdoor fans 26, hot-gas bypass valve, capillary tube 28, and electromagnetic induction heating unit 6 are housed within the outdoor unit 2. The indoor heat exchanger 41 and the indoor fan 42 are housed within the indoor unit 4.

The refrigerant circuit 10 has a discharge tube A, an indoor-side gas tube B, an indoor-side liquid tube C, an outdoor-side liquid tube D, an outdoor-side gas tube E, an accumulator tube F, an intake tube G, a hot-gas bypass circuit H, branch tubes K, and juncture tubes J. Large amounts of gas-state refrigerant pass through the indoor-side gas tube B and the outdoor-side gas tube E, but the refrigerant passing through is not limited to gas refrigerant. Large amount of liquid-state refrigerant pass through the indoor-side liquid tube C and the indoor-side liquid tube D, but the refrigerant passing through is not limited to liquid refrigerant.

The discharge tube A is connected to the compressor 21 and the four-way switching valve 22.

The indoor-side gas tube B is connected to the four-way switching valve 22 and the indoor heat exchanger 41.

The indoor-side liquid tube C is connected to the indoor heat exchanger 41 and the outdoor motor-driven expansion valve 24.

The indoor-side liquid tube D is connected to the outdoor motor-driven expansion valve 24 and the outdoor heat exchanger 23.

The outdoor-side gas tube E is connected to the outdoor heat exchanger 23 and the four-way switching valve 22.

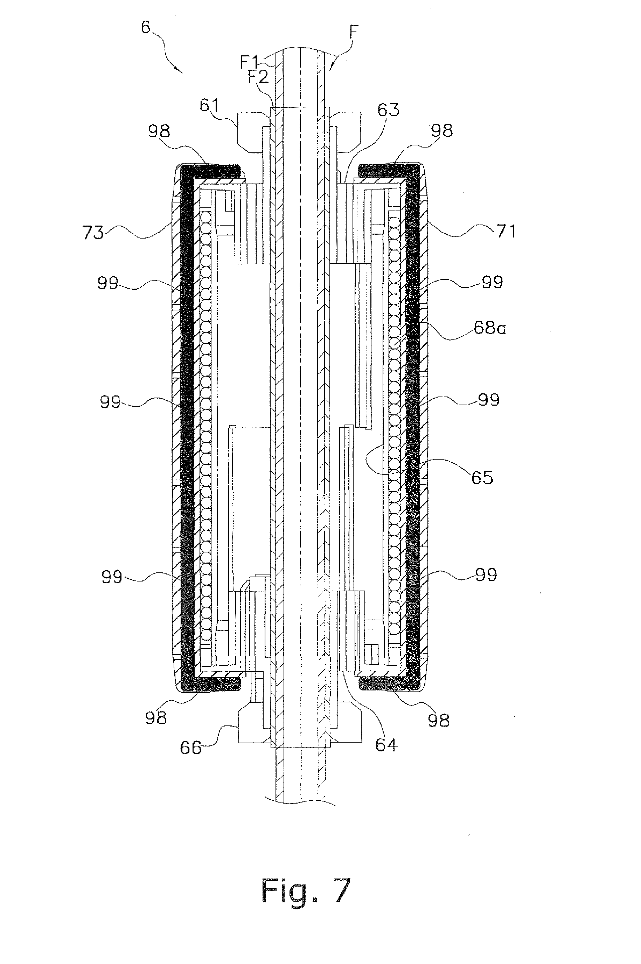

The accumulator tube F is connected to the four-way switching valve 22 and the accumulator 25, and extends in the vertical direction in the installed state of the outdoor unit 2. The electromagnetic induction heating unit 6 is attached to a portion of the accumulator tube F. At least the heated portion of the accumulator tube F that is covered by the electromagnetic induction heating unit 6 is composed of copper tubing F1 covered on the periphery thereof by SUS (Stainless Used Steel: stainless steel) tubing F2 (see FIG. 7). The portion other than the SUS tubing of the tube that constitutes the refrigerant circuit 10 is composed of copper tubing. The material of the tubing for covering the periphery of the abovementioned copper tubing is not limited to SUS, and may be iron, copper, aluminum, chrome, nickel, or another conductor, or an alloy or the like containing two or more types of metals selected from these metals, for example. Examples of the SUS include ferritic and martensitic SUS as well as combinations of these two types. The accumulator tube F herein also may not necessarily be provided with a magnetic substance or a material that includes a magnetic substance, and preferably includes the substance in which induction heating is to take place. The magnetic material may constitute the entire accumulator tube F, or may be used to form only the inside surface of the accumulator tube F, or may be present in the material constituting the accumulator tube F, for example. By this electromagnetic induction heating, the accumulator tube F can be heated by electromagnetic induction, and it is possible to heat the refrigerant that is drawn into the compressor 21 via the accumulator 25. The air-warming ability of the air conditioning apparatus 1 can thereby be enhanced. Even in a case in which the compressor 21 is not adequately warmed up at the start of air-warming operation, deficiency in performance can be overcome by the rapid heating provided by the electromagnetic induction heating unit 6. Furthermore, in a case in which the four-way switching valve 22 is switched to the state for air-cooling operation, and defrost operation is performed to remove frost from the outdoor heat exchanger 23, the electromagnetic induction heating unit 6 rapidly heats the accumulator tube F, and the compressor 21 can thereby compress rapidly warmed refrigerant. The temperature of the hot gas discharged from the compressor 21 can therefore be rapidly increased. The time needed for the defrost operation to melt the frost can thereby be shortened. It is thereby possible to return to air-warming operation as quickly as possible, and amenity to the customer can be enhanced even in a case in which a timely defrost operation must be performed during air-warming operation.

The intake tube G is connected to the accumulator 25 and the intake side of the compressor 21.

The hot-gas bypass circuit H connects a branch point A1 provided partway in the discharge tube A with a branch point D1 provided partway in the indoor-side liquid tube D. The hot-gas bypass valve 27, which is capable of switching between a state of allowing passage refrigerant and a state of not allowing passage of refrigerant, is disposed partway in the hot-gas bypass circuit H.

The branch tubes K constitute a portion of the outdoor heat exchanger 23, and are tubes which are branched into a plurality of tubes formed by branching of the refrigerant tube, which extends from a gas-side outlet/inlet 23e of the outdoor heat exchanger 23, at a branch juncture point 23k described hereinafter, in order to increase the effective surface area for heat exchange. The branch tubes K extend from the branch juncture point 23k to a juncture branch point 23j, and merge at the juncture branch point 23j.

The juncture tubes J constitute a portion of the outdoor heat exchanger 23, and are tubes which extend from the juncture branch point 23j to a liquid-side outlet/inlet 23d of the outdoor heat exchanger 23. The juncture tubes J are capable of coordinating the degree of supercooling of the refrigerant that flows out from the outdoor heat exchanger 23 during air-cooling operation, and of thawing ice that forms in the vicinity of the lower end of the outdoor heat exchanger 23 during air-warming operation.

The four-way switching valve 22 is capable of switching between an air-cooling operation cycle and an air-warming operation cycle. In FIG. 1, the connection state for air-warming operation is indicated by solid lines, and the connection state for air-cooling operation is indicated by dashed lines. During air-warming operation, the indoor heat exchanger 41 functions as a refrigerant cooler, and the outdoor heat exchanger 23 functions as a refrigerant heater. During air-cooling operation, the outdoor heat exchanger 23 functions as a refrigerant cooler, and the indoor heat exchanger 41 functions as a refrigerant heater.

The outdoor heat exchanger 23 has the gas-side outlet/inlet 23e, the liquid-side outlet/inlet 23d, the branch juncture point 23k, the juncture branch point 23j, the branch tubes K, the juncture tubes J, and heat exchange fins 23z. The gas-side outlet/inlet 23e is positioned at an end part on the side of the outdoor-side gas tube E of the outdoor heat exchanger 23, and is connected to the outdoor-side gas tube E. The liquid-side outlet/inlet 23d is positioned at an end part on the side of the outdoor-side liquid tube D of the outdoor heat exchanger 23, and is connected to the outdoor-side liquid tube D. The branch juncture point 23k branches the tube that extends from the gas-side outlet/inlet 23e, and can branch or merge the refrigerant, depending on the direction of refrigerant flow. The branch tubes K extend as a plurality of tubes from branching portions at the branch juncture point 23k. The juncture branch point 23j merges the branch tubes K and can merge or branch the refrigerant, depending on the direction of refrigerant flow. The juncture tubes J extend from the juncture branch point 23j to the liquid-side outlet/inlet 23d. The heat exchange fins 23z are composed of a plurality of plate-shaped aluminum fins aligned in the plate thickness direction and arranged at a predetermined interval. The branch tubes K and the juncture tubes J all pass through the heat exchange fins 23z in common. Specifcally, the branch tubes K and the juncture tubes J are arranged so as to pass through different portions of the same heat exchange fins 23z in the plate thickness direction thereof.

An outdoor controller 12 for controlling the devices provided in the outdoor unit 2, and an indoor controller 13 for controlling the devices provided in the indoor unit 4 are connected by a communication line 11a, and a controller 11 is thereby formed. The controller 11 performs various types of control of the air conditioning apparatus 1.

### <1-2> Outdoor Unit 2

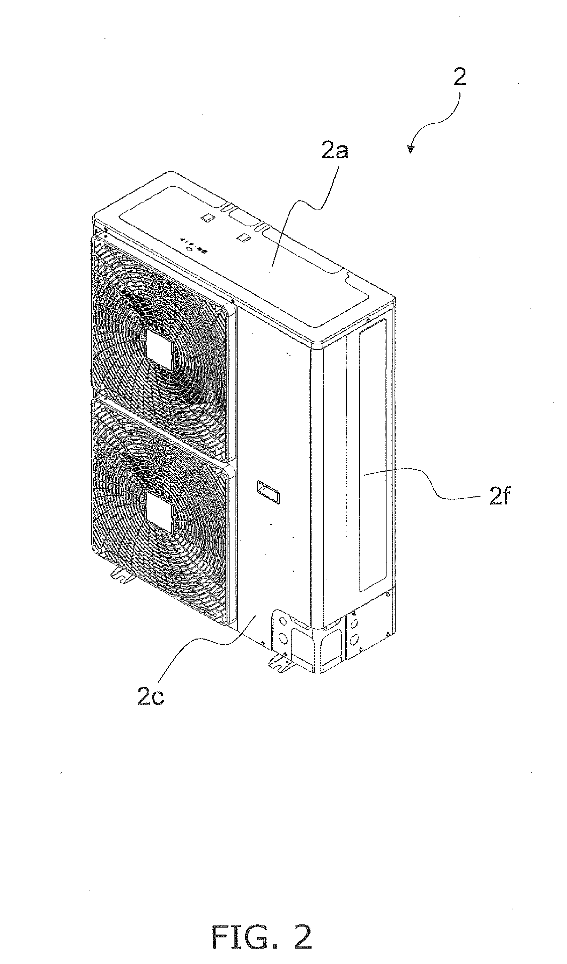

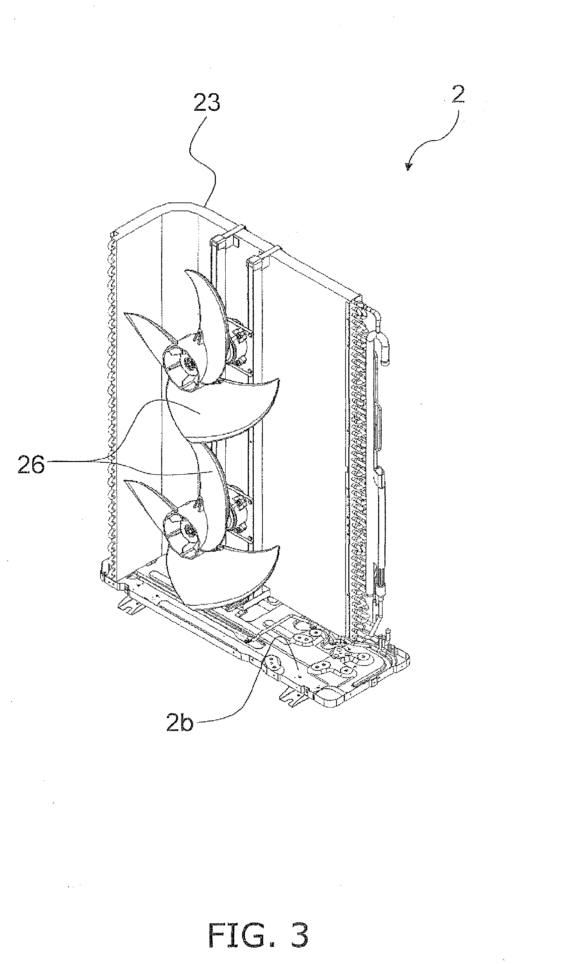

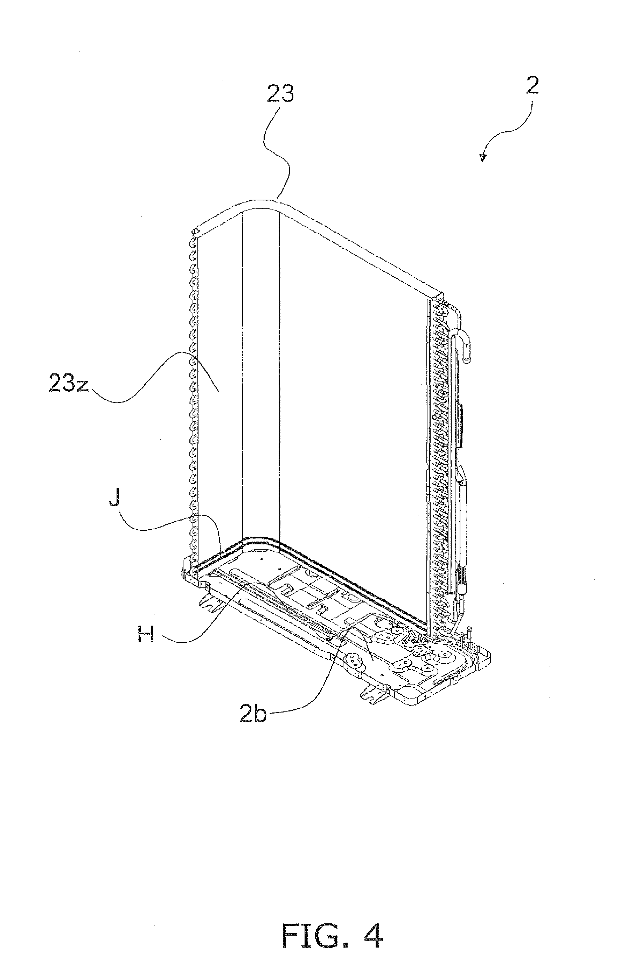

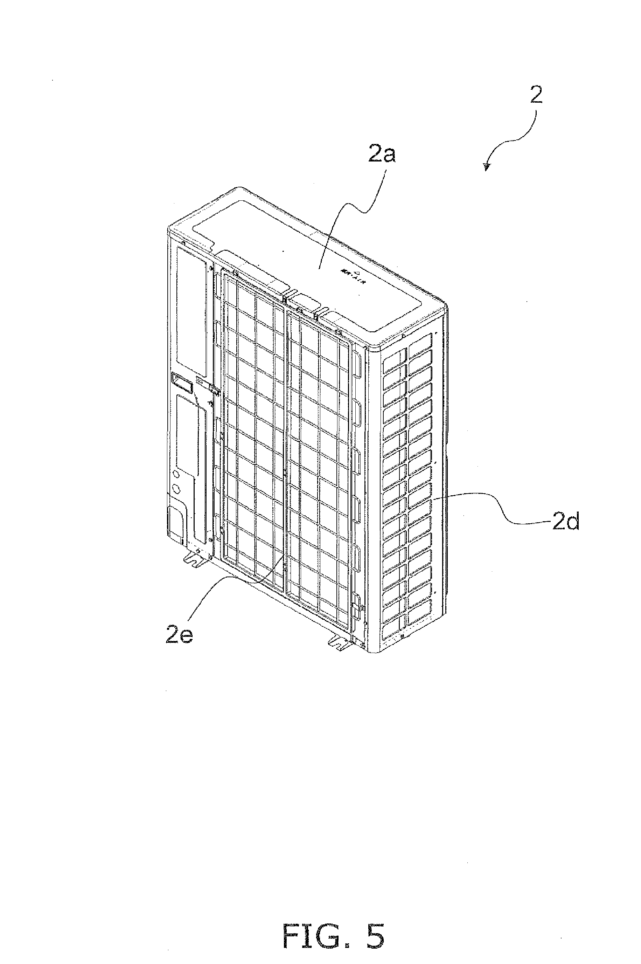

FIG. 2 is an external perspective view showing the front side of the outdoor unit 2. FIG. 5 is an external perspective view showing the back side of the outdoor unit 2. FIG. 3 is a perspective view showing the positional relationship between the outdoor heat exchanger 23 and the outdoor fans 26. FIG. 4 is a perspective view showing the positional relationship between the outdoor heat exchanger 23 and a bottom plate 2b.

The external surfaces of the outdoor unit 2 are formed by a substantially rectangular column-shaped outdoor-unit casing composed of a top plate 2a, a bottom plate 2b, a front panel 2c, a left-side panel 2d, a right-side panel 2f, and a back panel 2e.

The outdoor unit 2 is divided via a partitioning plate (not shown) into a blower chamber on the side of the left-side panel 2d, in which the outdoor heat exchanger 23, outdoor fans 26, and other components are disposed, and a machine chamber on the side of the right-side panel 2f, in which the compressor 21 and the electromagnetic induction heating unit 6 are disposed. The electromagnetic induction heating unit 6 is disposed in the machine chamber at an upper position in the vicinity of the left-side panel 2d and the top plate 2a. The plurality of heat exchange fins 23z of the outdoor heat exchanger 23 described above are arranged in the plate thickness direction so that the plate thickness direction is substantially horizontal. The juncture tubes J are arranged by passing through the heat exchange fins 23z in the thickness direction thereof in the lowest portion of the heat exchange fins 23z of the outdoor heat exchanger 23. The hot-gas bypass circuit H is disposed below the outdoor fans 26 and along the bottom of the outdoor heat exchanger 23.

### <1-3> Electromagnetic Induction Heating Unit 6

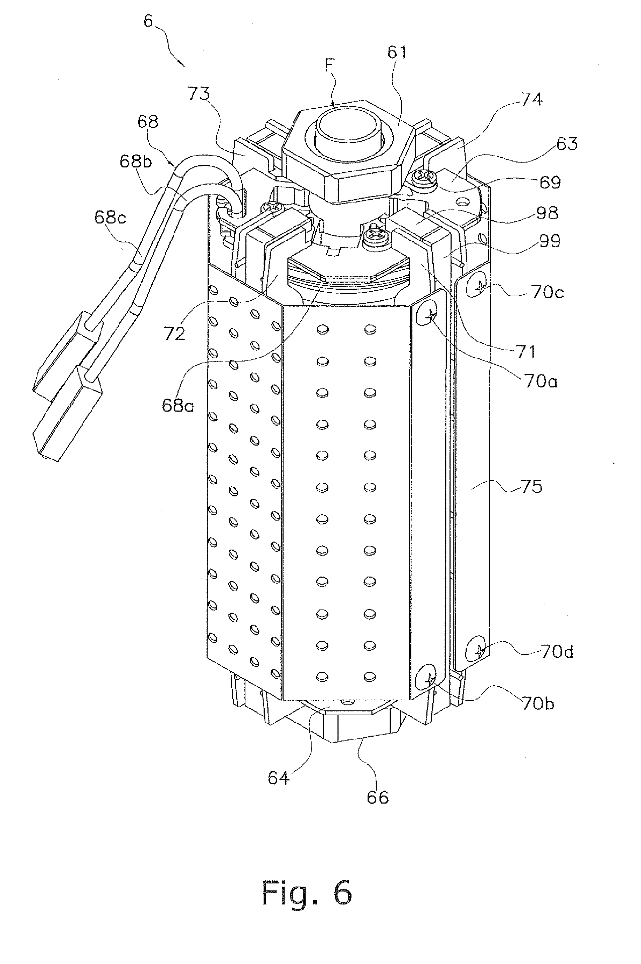

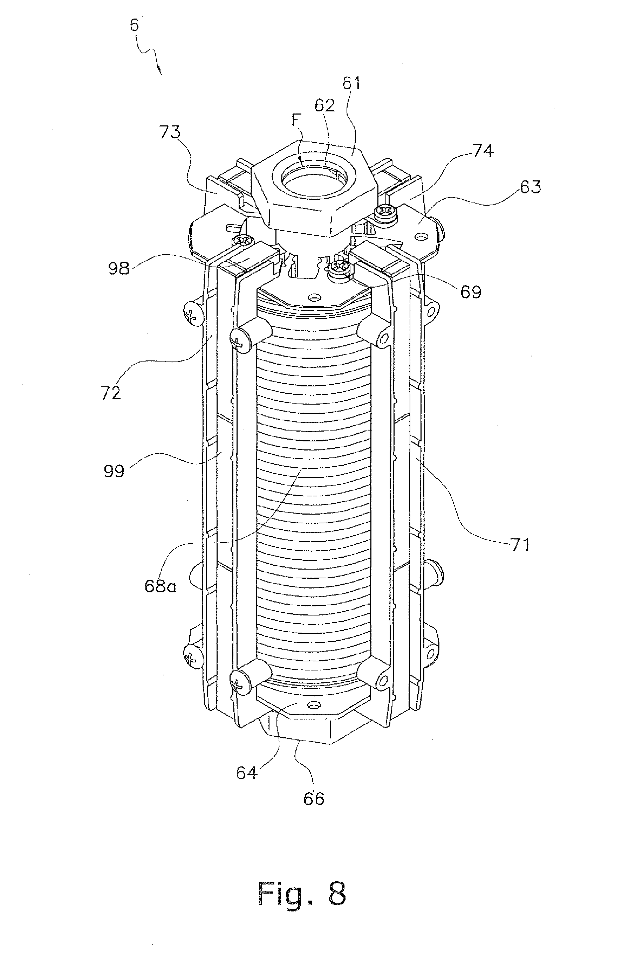

FIG. 6 is a rough perspective view showing the electromagnetic induction heating unit 6. FIG. 7 is a sectional view showing the electromagnetic induction heating unit 6. FIG. 8 is an external perspective view showing a state in which the screen cover 75 is removed from the electromagnetic induction heating unit 6.

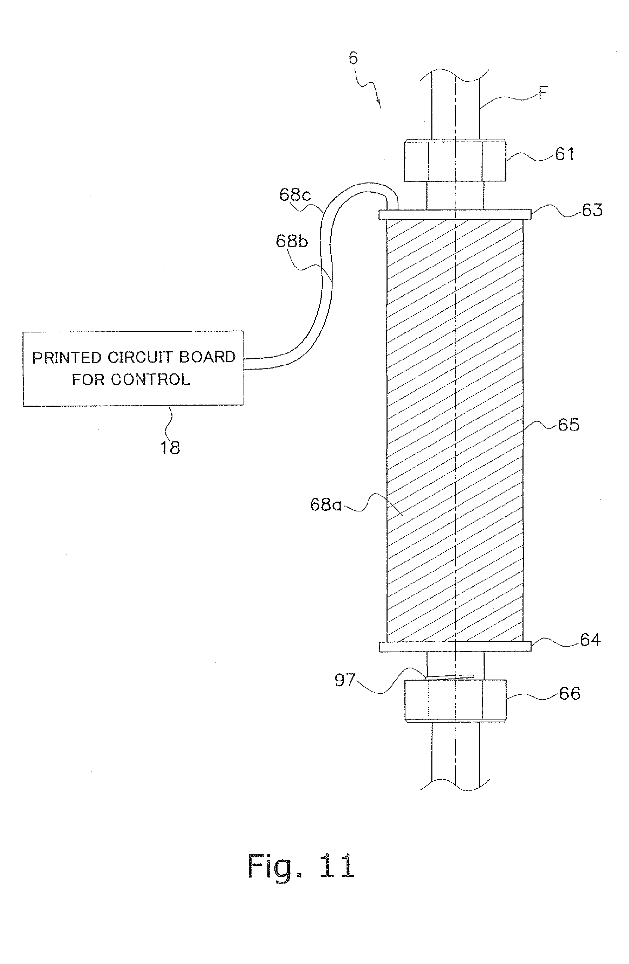

The electromagnetic induction heating unit 6 is provided so as to cover the heated portion of the accumulator tube F from the outside in the radial direction thereof, and heats the heated portion by electromagnetic induction heating. The heated portion of the accumulator tube F has a two-layer tubing structure which has copper tubing F1 on the inside and SUS tubing F2 on the outside thereof. Before the electromagnetic induction heating unit 6 is fixed to the accumulator tube F, a binding 97 such as the one shown in FIG. 11 is used to position the electromagnetic induction heating unit 6 with respect to the accumulator tube F. The operation of fixing can thereby be performed while the electromagnetic induction heating unit 6 is in position with respect to the accumulator tube F, and workability is enhanced.

The electromagnetic induction heating unit 6 is provided with a first hexagonal nut 61, a second hexagonal nut 66, a C-ring 62, a first bobbin lid 63, a second bobbin lid 64, a bobbin main body 65, a first ferrite case 71, a second ferrite case 72, a third ferrite case 73, a fourth ferrite case 74, a first ferrite 98, a second ferrite 99, a coil 68, a screen cover 75, a thermistor 14, and a fuse 15.

The first hexagonal nut 61 is made of resin, and fixes the electromagnetic induction heating unit 6 in the vicinity of the top end of the accumulator tube F. The second hexagonal nut 66 is made of resin, and fixes the electromagnetic induction heating unit 6 in the vicinity of the bottom end of the accumulator tube F.

The C-ring 62 is made of resin, and is fixed in surface contact with the accumulator tube F in cooperation with the first hexagonal nut 61 and the first bobbin lid 63. Although not shown in the drawing, the C-ring 62 is also fixed in surface contact with the accumulator tube F in cooperation with the second hexagonal nut 66 and the second bobbin lid 64.

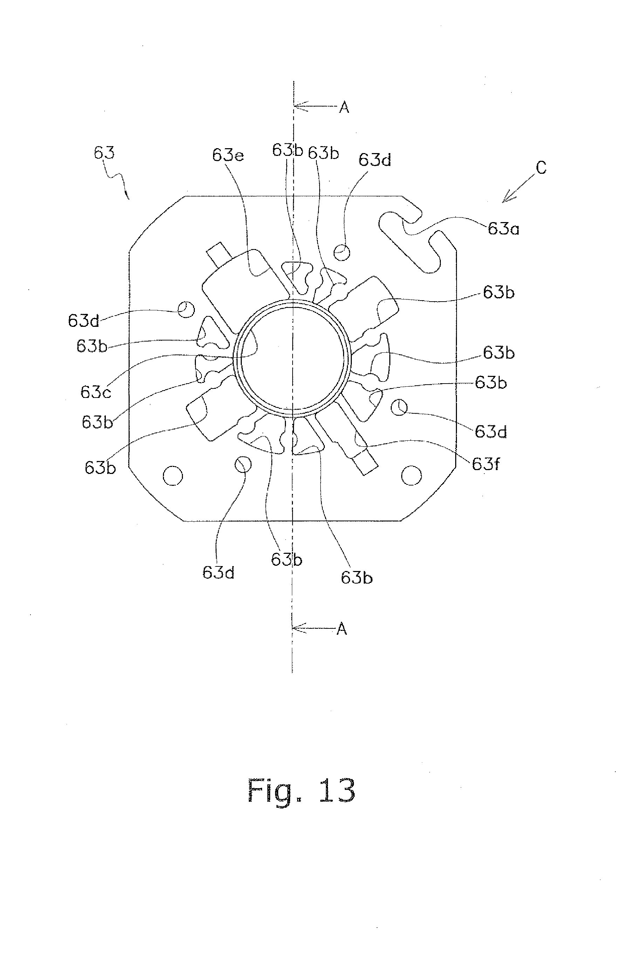

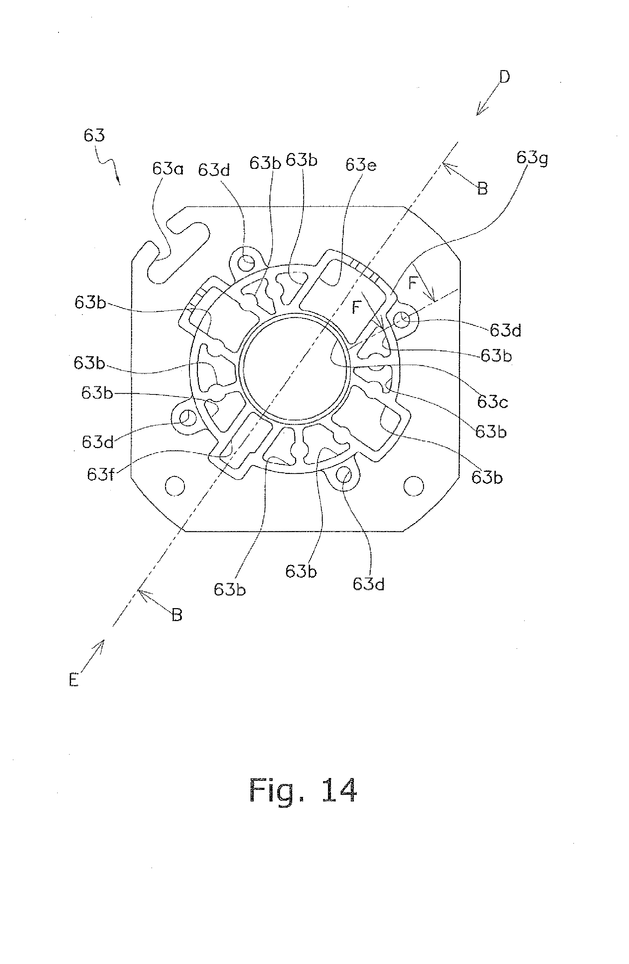

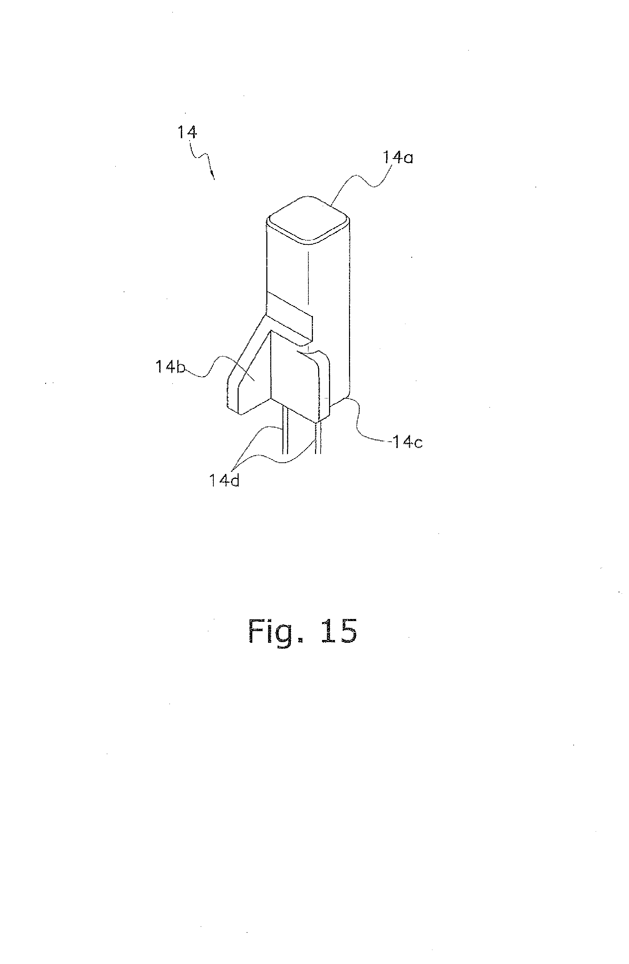

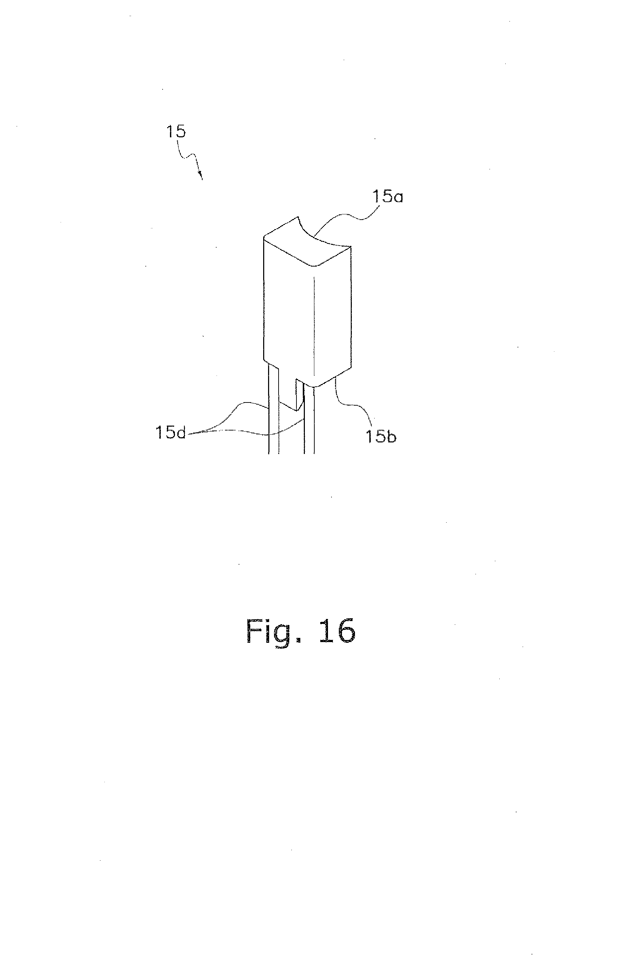

The first bobbin lid 63 is made of resin, is one of the members for determining the relative positioning of the accumulator tube F and the coil 68 in the electromagnetic induction heating unit 6, and covers the accumulator tube F from the periphery thereof above the electromagnetic induction heating unit 6. The second bobbin lid 64 is made of resin, has the same shape as the first bobbin lid 63, and covers the accumulator tube F from the periphery thereof below the electromagnetic induction heating unit 6. FIG. 13 is a top view showing the first bobbin lid 63. FIG. 14 is a bottom view showing the first bobbin lid 63. The first bobbin lid 63 has a cylindrical part 63c for the tube, for fixing the accumulator tube F and the electromagnetic induction heating unit 6 in cooperation with the first hexagonal nut 61 and the C-ring 62 while allowing the accumulator tube F to pass through. The first bobbin lid 63 has a substantially T-shaped hook-shaped part 63a formed toward the inside from the external peripheral portion, for retaining a coil first portion 68b and a coil second portion 68c while allowing the coil first portion 68b and coil second portion 68c to pass through. The first bobbin lid 63 has a plurality of radiating openings 63b which run through in the vertical direction in order to dissipate heat that accumulates between the bobbin main body 65 and the SUS tubing F2 to the outside. The first bobbin lid 63 has four screw holes 63d for screws 69, for screwing the first through fourth ferrite cases 71 through 74 via the screws 69. The first bobbin lid 63 also has a fuse insertion opening 63e and a thermistor insertion opening 63f. The fuse insertion opening 63e is an opening used for attaching the fuse 15 shown in FIG. 16, and has a shape which conforms to the outer edge shape of the fuse 15 as viewed in the insertion direction thereof. The thermistor insertion opening 63f is an opening used for attaching the thermistor 14 shown in FIG. 15, and has a shape which conforms to the outer edge shape of the thermistor 14 as viewed in the insertion direction thereof. Since the thermistor 14 and the fuse 15 are attached from below the electromagnetic induction heating unit 6, the thermistor insertion opening 63f and fuse insertion opening 63e of the first bobbin lid 63 perform the same radiating function as the radiating openings 63b. Since the warm air to be radiated accumulates in the upper space inside the bobbin main body 65, providing more radiating openings at the top than at the bottom enables efficient heat dissipation. The thermistor 14 is inserted in the thermistor insertion opening 63f of the second bobbin lid 64, the fuse 15 is inserted in the fuse insertion opening 63e of the second bobbin lid 64, and the thermistor 14 and fuse 15 are each attached. As shown in FIG. 14, on the bottom side of the first bobbin lid 63, a bobbin cylinder top part 63g extends downward for fitting with the bobbin main body 65 by being positioned on the inside of a top end cylindrical part (described hereinafter) of the bobbin main body 65. So as not to close the passage state of the radiating openings 63b, screw holes 63d, fuse insertion opening 63e, and thermistor insertion opening 63f described above, the bobbin cylinder top part 63g is formed so as to extend in the passage direction from a portion that conforms to the outer edges of each opening. The openings and shape of the first bobbin lid 63 are the same as in the second bobbin lid 64, the reference numerals beginning with 63 for each member of the first bobbin lid 63 correspond to the reference numerals beginning with 64 for each member of the second bobbin lid 64, and no further description of these corresponding members will be given. The second bobbin lid 64 also has a tube cylinder top part 64c (see FIG. 7), the same as the first bobbin lid 63, and the cylinder top part 64c fits with a bottom end cylindrical part (described hereinafter) of the bobbin main body 65.

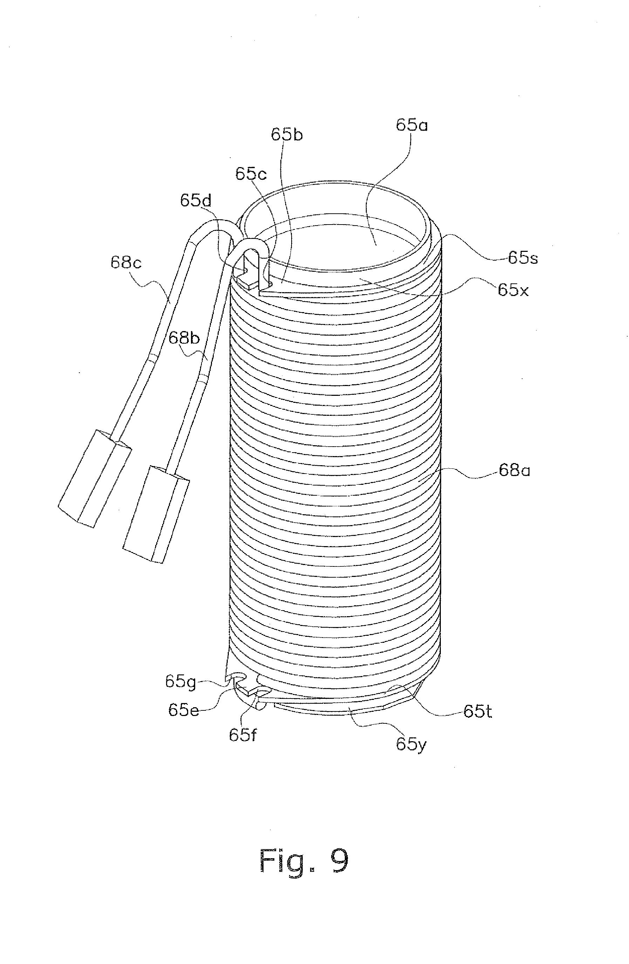

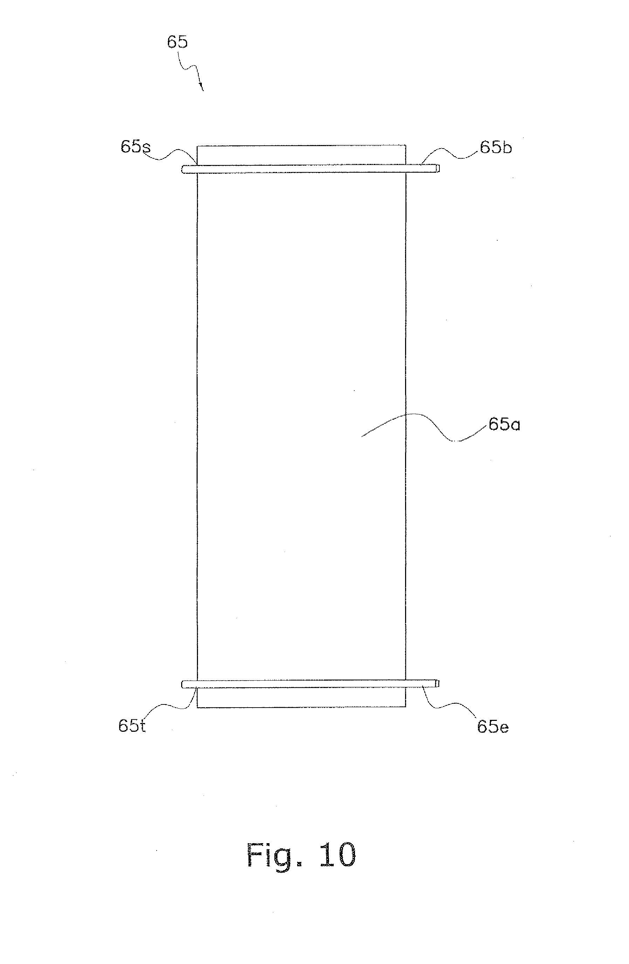

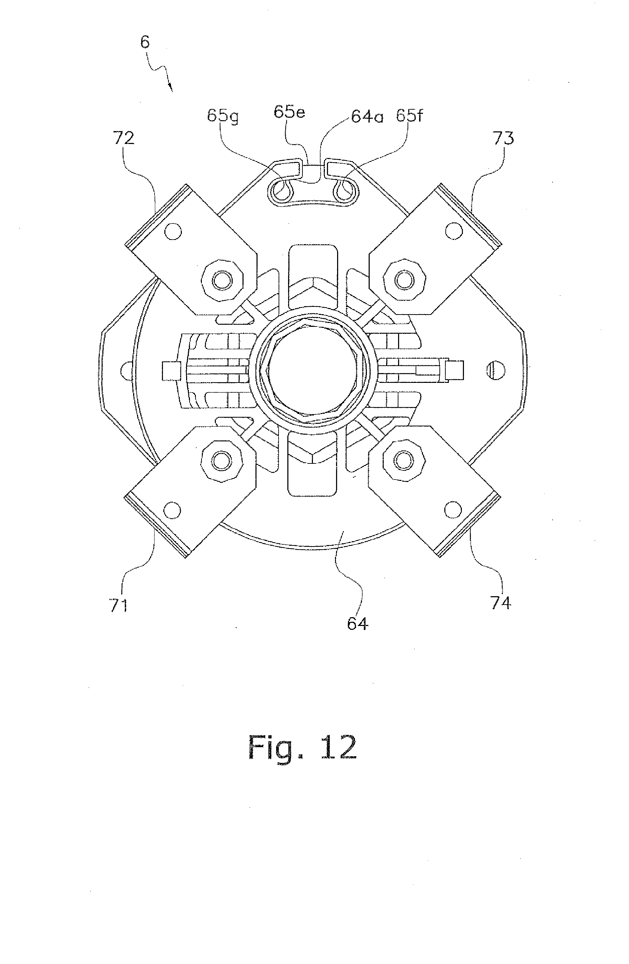

The coil 68 is wound around the bobbin main body 65, as shown in FIG. 9. As shown in FIG 10, the bobbin main body 65 has a cylindrical part 65a having a cylindrical shape. The bobbin main body 65 has a first winding stop 65s formed so as to protrude in the radial direction at a portion slightly lower than the top end, and a second winding stop 65t formed so as to protrude in the radial direction at a portion slightly higher than the bottom end. A top end cylindrical part 65x extends upward from the first winding stop 65s. A bottom end cylindrical part 65y extends downward from the second winding stop 65t. The first winding stop 65s has a first coil retaining part 65b that protrudes further outward in the radial direction. The first coil retaining part 65b has a coil retaining groove 65c formed as an indentation in the radial direction to hold the coil first portion 68b therein, and a coil retaining groove 65d formed as an indentation in the radial direction to hold the coil second portion 68c therein. The second winding stop 65t has a second coil retaining part 65e in which coil retaining grooves 65f, 65g are formed, in the same manner as in the first winding stop 65s. As shown in the bottom view of the electromagnetic induction heating unit 6 in FIG. 12, the outsides of the coil retaining grooves 65f, 65g formed in the bobbin main body 65 are covered by a hook-shaped part 64a of the second bobbin lid 64, and the coil first portion 68b and coil second portion 68c can thereby be more reliably retained. Since the coil retaining grooves 65f, 65g and the hook-shaped part 64a are offset in the direction in which the accumulator tube F extends, the coil first portion 68b and the coil second portion 68c can be retained at a plurality of locations in the extension direction thereof. Localized loads on the coil 68 can therefore be made less prone to occur. In the bobbin main body 65, a space is formed between the bobbin main body 65 and the accumulator tube F on the inside toward the accumulator tube F, and a distance is provided so that the magnetic flux that forms when current is fed to the coil 68 more efficiently passes through the SUS tubing F2 of the accumulator tube F.

The first ferrite case 71 holds the first bobbin lid 63 and the second bobbin lid 64 from the direction in which the accumulator tube F extends. The first ferrite case 71 has a portion for accommodating the first ferrite 98 and second ferrite 99 described hereinafter. The second ferrite case 72, third ferrite case 73, and fourth ferrite case 74 are the same as the first ferrite case 71, and are disposed in positions so as to cover the bobbin main body 65, first bobbin lid 63, and second bobbin lid 64 from the outside in four directions. As shown in FIGS. 6, 8, and 12, the first bobbin lid 63 is screwed via metal screws 69 and fixed to each of the first through fourth ferrite cases 71 through 74.

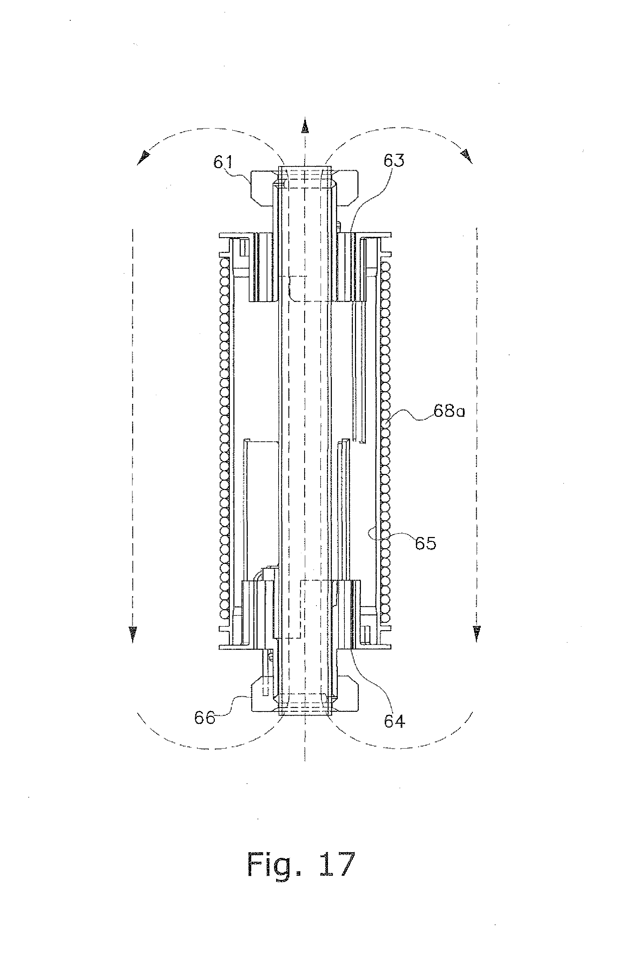

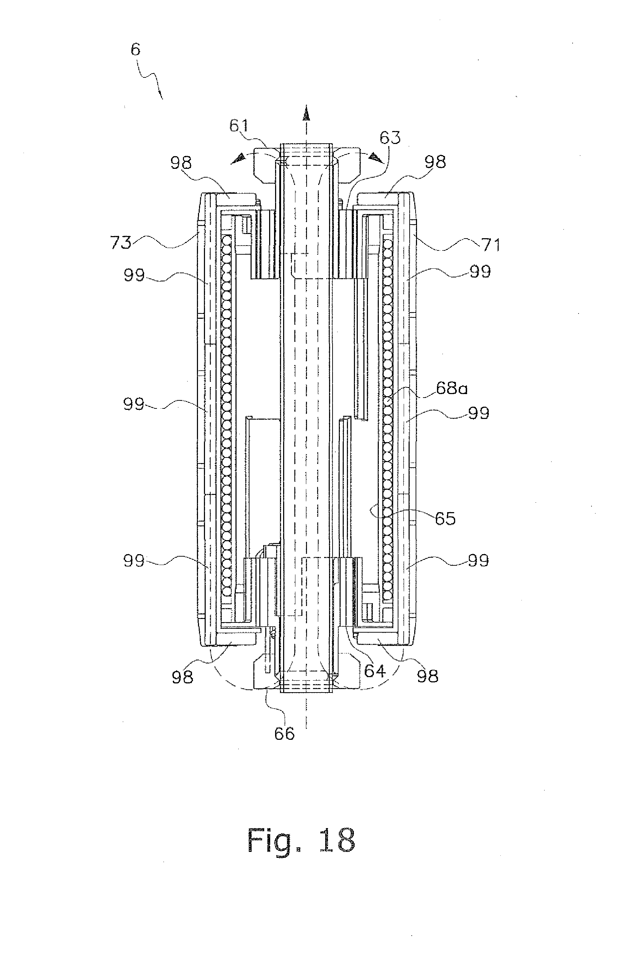

The first ferrite 98 is composed of a ferrite material having high magnetic permeability, and when current is fed to the coil 68, the first ferrite 98 collects the magnetic flux that occurs in portions outside the SUS tubing F2 as well and forms a path for the magnetic flux. The first ferrite 98 is accommodated particularly in the accommodating parts of the first through fourth ferrite cases 71 through 74 near the top and bottom ends of the electromagnetic induction heating unit 6. The second ferrite 99 is the same as the first ferrite 98, other than with respect to the position and shape thereof, and is disposed at a position near the outside of the bobbin main body 65 in the accommodating parts of the first through fourth ferrite cases 71 through 74. In a case in which the first ferrite 98 and second ferrite 99 are not provided, the magnetic flux leaks out on the periphery as shown in FIG. 17, for example. In the electromagnetic induction heating unit 6 of the present embodiment, however, since the first ferrite 98 and second ferrite 99 are provided on the outside of the coil 68, the magnetic flux flow as shown in FIG. 18, and leakage flux can be reduced.

The coil 68 has a coil winding portion 68a that is helically wound on the outside of the bobbin main body 65 with the extension direction of the accumulator tube F as the axial direction, a coil first portion 68b that extends at one end of the coil 68 with respect to the coil winding portion 68a, and a coil second portion 68c that extends at the other end, on the opposite side from the one end of the coil 68. This coil 68 is positioned inside the first through fourth ferrite cases 71 through 74. The coil first portion 68b and the coil second portion 68c are connected to a printed circuit board 18 for control, as shown in FIG. 11. The coil 68 receives a high-frequency current fed from the printed circuit board 18 for control. The printed circuit board 18 for control is controlled by the controller 11. When the fed high-frequency current is received, the coil winding portion 68a generates a magnetic flux. Specifically, as indicated by dashed lines in FIG. 18, a magnetic flux occurs which is substantially elliptical on the plane extending in the axial direction and in the radial direction with respect to the accumulator tube F, through the portion of the SUS tubing F2 closest to the coil winding portion 68a, and the portions of the first ferrite 98, second ferrite 99, and screen cover 75 closest to the coil winding portion 68a. The magnetic flux thus formed causes a current (eddy current) to occur by electromagnetic induction in the SUS tubing F2. As a current flows through the SUS tubing F2, heat is evolved in a portion thereof that acts as an electrical resistor. Merely by winding the coil 68 on the outside of the bobbin main body 65, the coil 68 can be placed so that the axial direction thereof is substantially the same as the axial direction of the accumulator tube F. By providing the coil 68 in a substantially cylindrical shape, more magnetic flux can be supplied to the SUS tubing F2 of the accumulator tube F, and the efficiency of heating can be enhanced. Copper wire, which is a good conductor, is used as the material of the coil 68 herein for the sake of efficiency in generating a magnetic flux. The material of the coil 68 is not particularly limited insofar as the material conducts electricity.

As is apparent by comparing FIG. 6 and FIG. 8, the screen cover 75 is disposed on the outermost peripheral portion of the electromagnetic induction heating unit 6, and collects the magnetic flux that cannot be held in by only the first ferrite 98 and the second ferrite 99. As shown in FIG. 6, the screen cover 75 is screwed and fixed to the first ferrite case 71 via screws 70a, 70b, 70c, 70d. Through this configuration, there is almost no leakage flux on the outside of the screen cover 75 in the electromagnetic induction heating unit 6, and the areas in which magnetic flux occurs can be self-determined.

As shown in FIG. 15, the thermistor 14 is attached so as to be in direct contact with the external surface of the accumulator tube F, and the thermistor 14 has a thermistor detector 14a, an outside protrusion 14b, a lateral protrusion 14c, and thermistor wires 14d. The thermistor 14 is in direct contact with the external surface of the accumulator tube F on the downstream side in the refrigerant flow direction of the portion of the accumulator tube F to which the electromagnetic induction heating unit 6 is attached. Specifically, the thermistor 14 is in direct contact with the external surface of the accumulator tube F at a point downstream from the center position in the width of the coil 68, in the refrigerant flow direction of the accumulator tube F. The thermistor detector 14a is shaped so as to conform to the curved shape of the external surface of the accumulator tube F, and has a surface area of substantial contact. The outside protrusion 14b is a protrusion which protrudes in the direction away from the accumulator tube F in a state in which the thermistor 14 is attached, and the shape of the outside protrusion 14b conforms to the edge of the thermistor insertion opening 63f of the second bobbin lid 64. The lateral protrusion 14c is also shaped so as to conform to the edge of the thermistor insertion opening 63f of the second bobbin lid 64 in the same manner as the outside protrusion 14b, and the lateral protrusion 14c extends away from the outside protrusion 14b. The thermistor wires 14d transmit the detection result of the thermistor detector 14a as a signal to the controller 11. On the basis of the detection result of the thermistor detector 14a, the controller 11 controls the fed amount of high-frequency current via the printed circuit board 18 for control, and controls the compressor 21, outdoor motor-driven expansion valve 24, outdoor fans 26, and indoor fan 42. Specifically, the thermistor 14 is in direct contact with the external surface of the accumulator tube F at a point downstream from the center position in the width of the coil 68, in the refrigerant flow direction of the accumulator tube F. The thermistor 14 is inserted upward in FIG. 15, but because the thermistor 14 has the outside protrusion 14b and the lateral protrusion 14c, the thermistor 14 has an asymmetrical shape as viewed from the insertion direction, the same as the thermistor insertion opening 63f. Errors can therefore be prevented in the attachment of the thermistor 14, and attachment workability is enhanced. In the present embodiment, the detection value of the thermistor 14 is used only for control of the electromagnetic induction heating unit 6 and not for other control. In other words, the thermistor 14 is provided as a detector dedicated for control of the electromagnetic induction heating unit 6.

As shown in FIG. 16, the fuse 15 is attached so as to be in direct contact with the external surface of the accumulator tube F, and has a fuse detector 15a, an asymmetrical shape 15b, and fuse wires 15d. The fuse 15 is in direct contact with the external surface of the accumulator tube F on the downstream side in the refrigerant flow direction of the portion of the accumulator tube F to which the electromagnetic induction heating unit 6 is attached. The fuse detector 15a has an indented shape which is curved so as to conform to the curved shape of the external surface of the accumulator tube F, and the fuse detector 15a has a surface area of substantial contact. The asymmetrical shape 15b is inserted upward in FIG. 16, the same as the thermistor 14 described above, but has an asymmetrical shape as viewed from the insertion direction, the same as the fuse insertion opening 63e. Errors can therefore be prevented in the attachment of the fuse 15, and attachment workability is enhanced. The fuse wires 15d are also connected to the controller 11. When the fuse 15 detects a temperature above a predetermined temperature, the controller 11 initiates control for stopping the supply of power to the coil 68.

### <1-4> Bobbin Main Body 65

The bobbin main body 65 will be described in detail below.

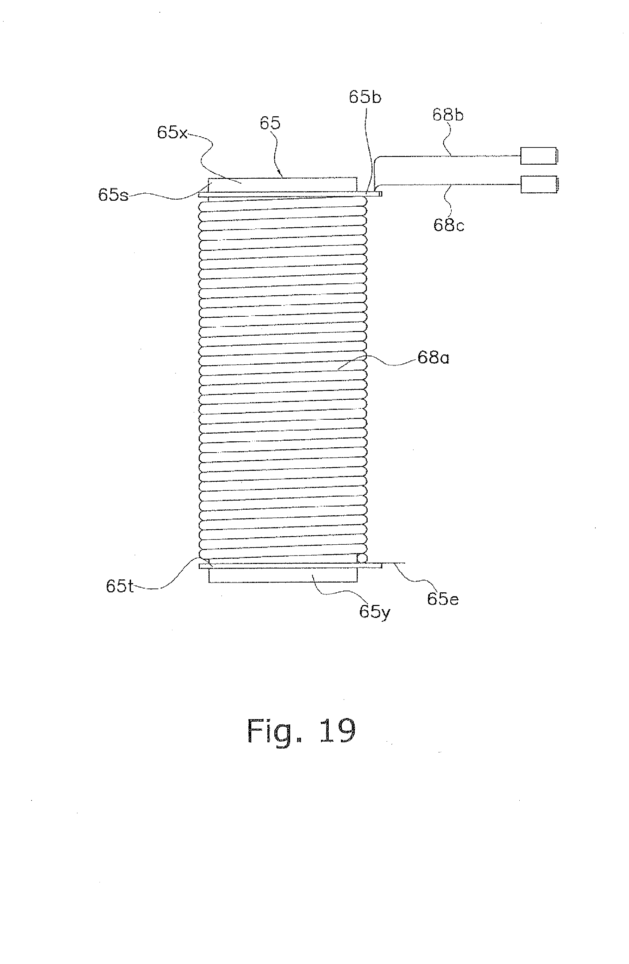

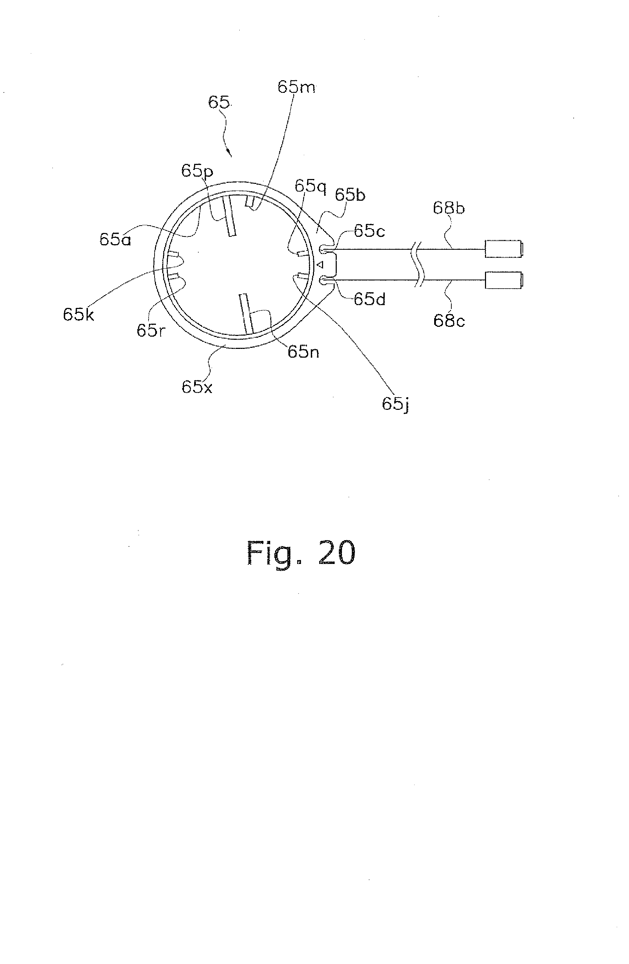

FIG. 19 is a side view showing the bobbin main body 65 with the coil 68 wound thereon. FIG. 20 is a top view showing the bobbin main body 65 with the coil 68 wound thereon.

In the bobbin main body 65, the coil 68 is wound onto the cylindrical part 65a, which is a cylindrical portion positioned between the first winding stop 65s and the second winding stop 65t in the axial direction. In the coil 68, the coil first portion 68b and coil second portion 68c as portions other than the coil winding portion 68a are retained by the first coil retaining part 65b, and extend in the direction away from the bobbin main body 65. As shown in FIG. 20, in the first coil retaining part 65b, the coil first portion 68b is retained by the coil retaining groove 65c, and the coil second portion 68c is retained by the coil retaining groove 65d.

As shown in the top view of FIG. 20, the bobbin main body 65 has a plurality of protrusions extending to the inside from the top of the bobbin main body 65 inside the cylindrical part 65a, and a plurality of protrusions extending to the inside from the bottom of the bobbin main body 65 inside the cylindrical part 65a.

The bobbin main body 65 specifically has a first main body upper protrusion 65j, a second main body upper protrusion 65k, and a third main body upper protrusion 65m which are top protrusions, and a thermistor protrusion 65n, a fuse protrusion 65p, a first main body lower protrusion 65q, and a second main body lower protrusion 65r which are bottom protrusions.

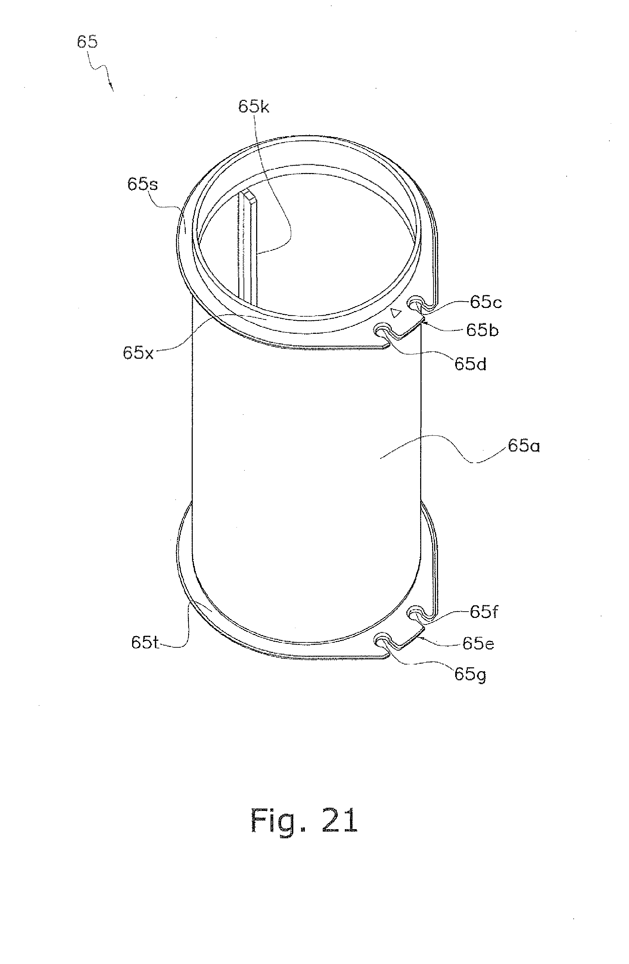

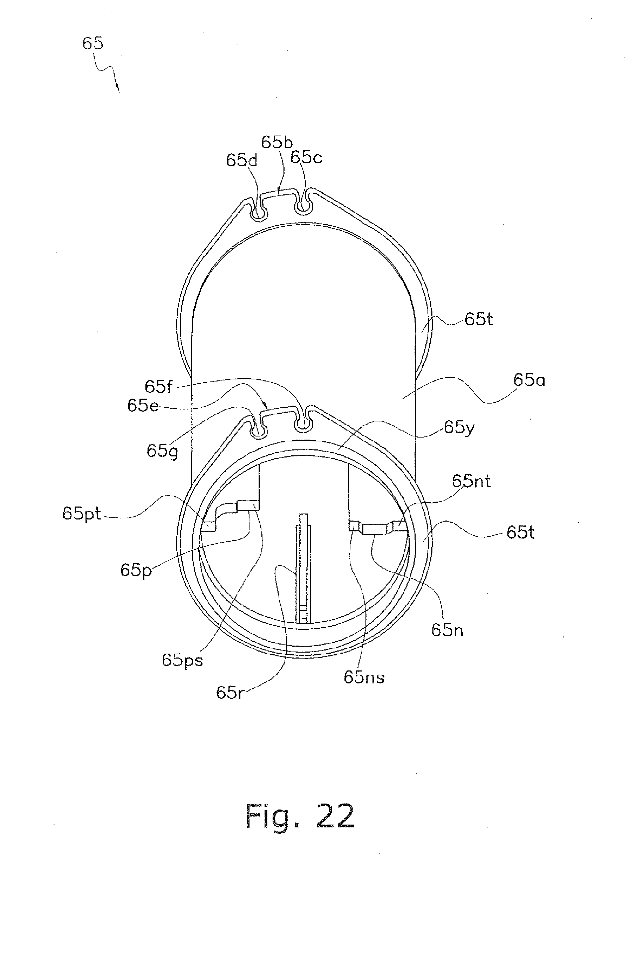

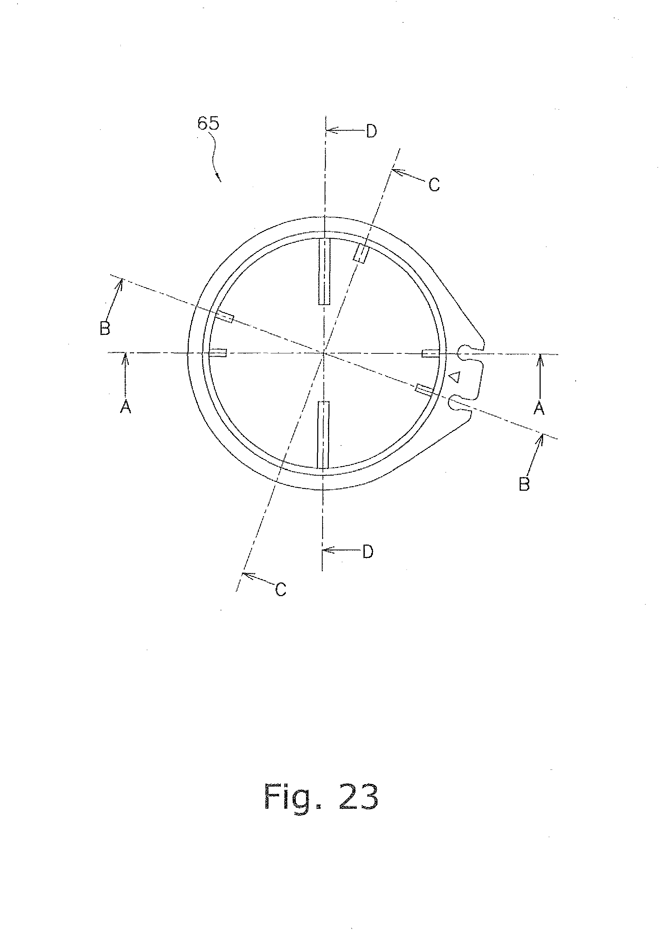

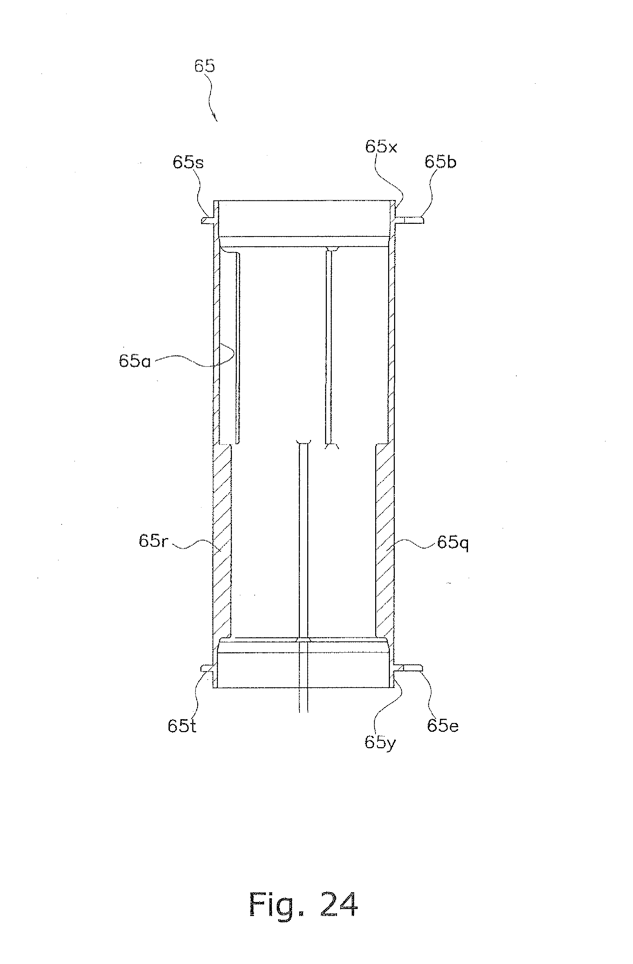

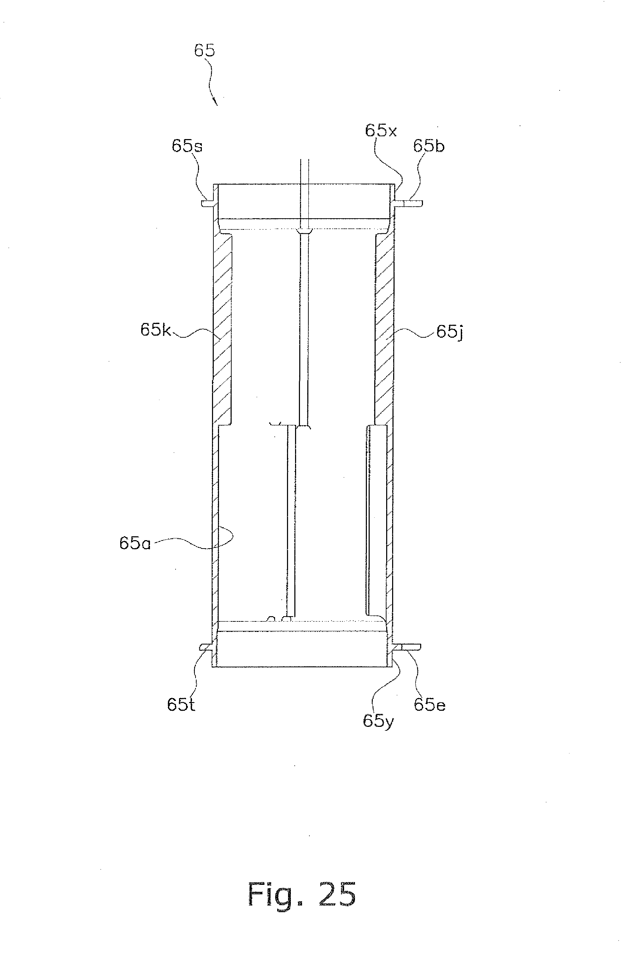

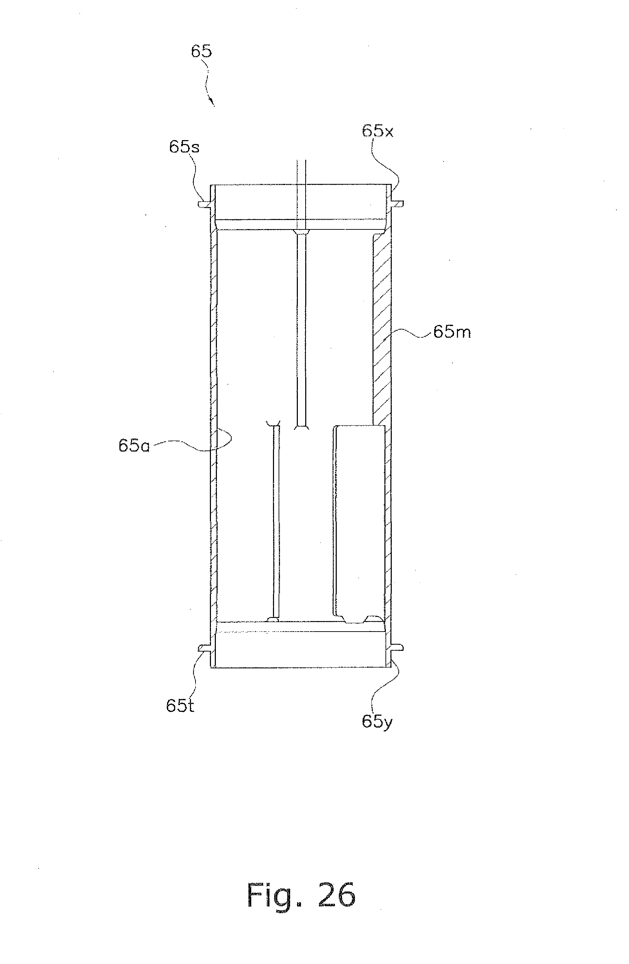

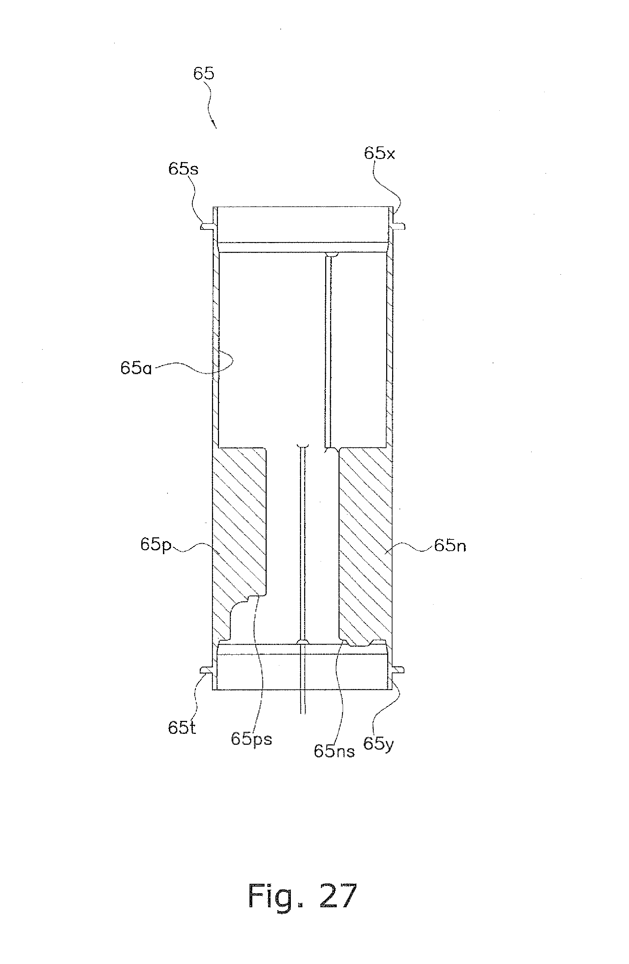

FIG. 21 is an external perspective view showing the bobbin main body 65 from above. FIG. 22 is an external perspective view showing the bobbin main body 65 from below. FIG. 23 shows each cross-section in a top view of the bobbin main body 65. FIG. 24 is a sectional view along line A-A. FIG. 25 is a sectional view along line B-B. FIG. 26 is a sectional view along line C-C. FIG. 27 is a sectional view along line D-D.

The first main body upper protrusion 65j, second main body upper protrusion 65k, and third main body upper protrusion 65m as top protrusions all extend toward the inside in the radial direction from different positions in the peripheral direction.

As shown in the sectional view of FIG. 25 along line D-D, the first main body upper protrusion 65j and the second main body upper protrusion 65k extend slightly so as to approach each other toward the inside in the radial direction from the inside portion of the upper half of the cylindrical part 65a. As shown in FIG. 21, the top end of the second main body upper protrusion 65k is the inside in the radial direction of the extending portion of the first winding stop 65s. The top ends of the first main body upper protrusion 65j and the third main body upper protrusion 65m are also at the same height.

The third main body upper protrusion 65m is positioned at a different cross-section than the first main body upper protrusion 65j and the second main body upper protrusion 65k, and extends slightly toward the inside in the radial direction to the same degree as the first main body upper protrusion 65j and the second main body upper protrusion 65k, as shown in the sectional view of FIG. 26 along line C-C.

The thermistor protrusion 65n, fuse protrusion 65p, first main body lower protrusion 65q, and second main body lower protrusion 65r as bottom protrusions all extend toward the inside in the radial direction from different positions in the peripheral direction.

The thermistor protrusion 65n and the fuse protrusion 65p extend significantly so as to approach each other toward the inside in the radial direction from the inside portion of the lower half of the cylindrical part 65a, as shown in the sectional view of FIG. 27 along line D-D. The thermistor protrusion 65n and fuse protrusion 65p are formed so as to protrude to a greater distance than the other protrusions, and the distal ends of the protruding portions extend to the vicinity of the external surface of the accumulator tube F. The position of the bobbin main body 65 with respect to the accumulator tube F can thereby be stabilized. As shown in FIGS. 27 and 22, a contoured shape which is contoured in the vertical direction is formed on the bottom side of the thermistor protrusion 65n, and a thermistor contacting surface 65ns for coming in contact with the thermistor 14 on the inside in the radial direction of the accumulator tube F is formed on the bottom side in the vicinity of the distal end of the protrusion. A thermistor spring contacting surface 65nt for contacting a thermistor attachment spring 16 when the thermistor attachment spring 16 described hereinafter is held against the second bobbin lid 64 is formed on the outside in the radial direction of the accumulator tube F, on the bottom side in the vicinity of the distal end of the bottom of the thermistor protrusion 65n.

As shown in FIGS. 27 and 22, a contoured shape which is contoured in the vertical direction is formed on the bottom side of the fuse protrusion 65p, and a fuse contacting surface 65ps for coming in contact with the fuse 15 is formed on the bottom side in the vicinity of the distal end of the protrusion. A fuse contacting surface 65pt for contacting a fuse attachment spring 17 when the fuse attachment spring 17 described below is held against the second bobbin lid 64 is also formed on the outside in the radial direction of the accumulator tube F, on the bottom side in the vicinity of the distal end of the bottom of the fuse protrusion 65p.

As shown in the sectional view of FIG. 24 along line A-A, the first main body lower protrusion 65q and the second main body lower protrusion 65r extend slightly so as to approach each other toward the inside in the radial direction from the inside portion of the lower half of the cylindrical part 65a.

Since the first main body upper protrusion 65j, second main body upper protrusion 65k, third main body upper protrusion 65m, thermistor protrusion 65n, fuse protrusion 65p, first main body lower protrusion 65q, and second main body lower protrusion 65r are provided to the bobbin main body 65 as described above, the cylindrical shape can be strengthened.

### <1-5> Bobbin Lids 63, 64

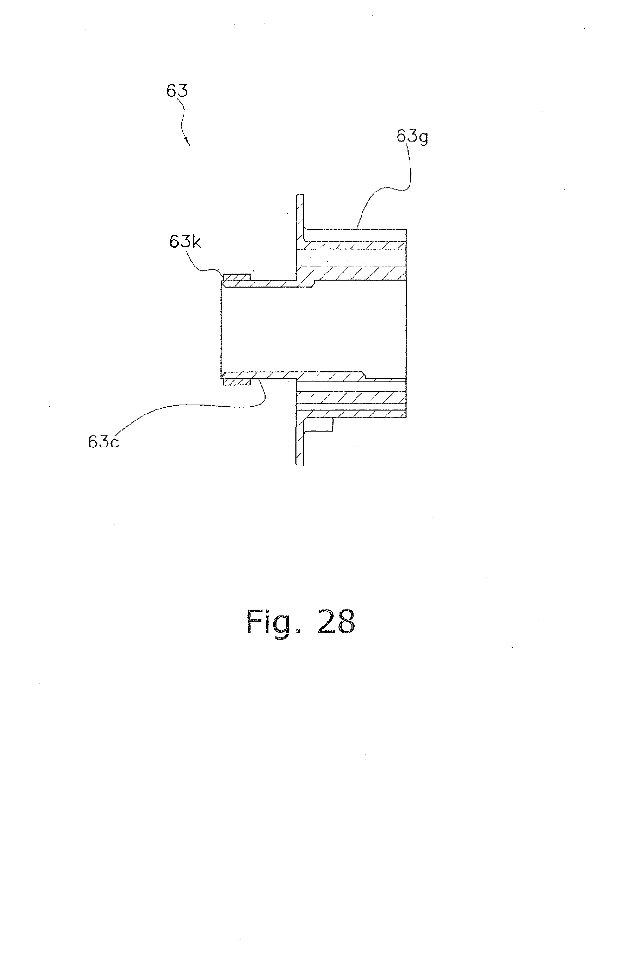

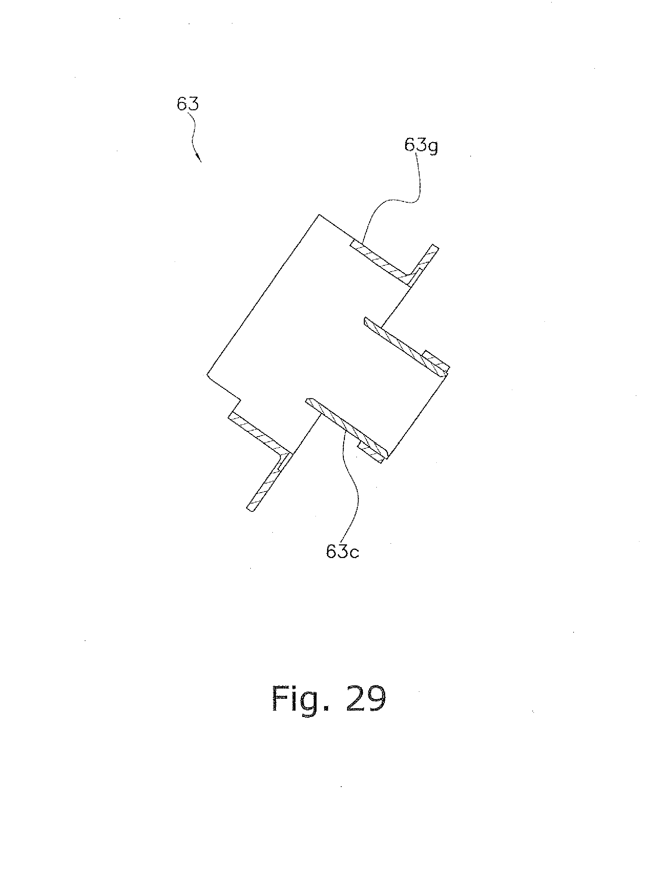

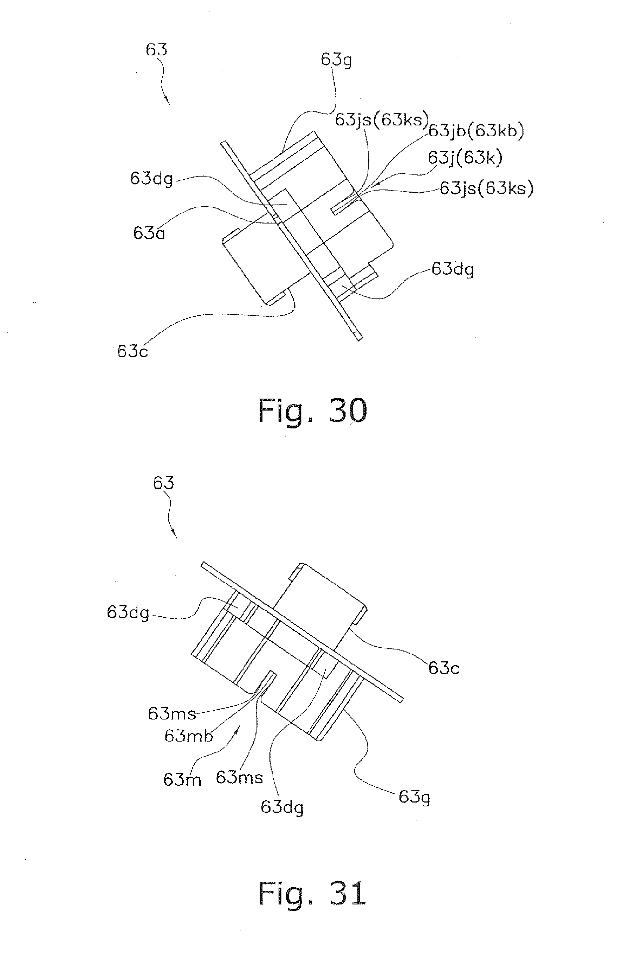

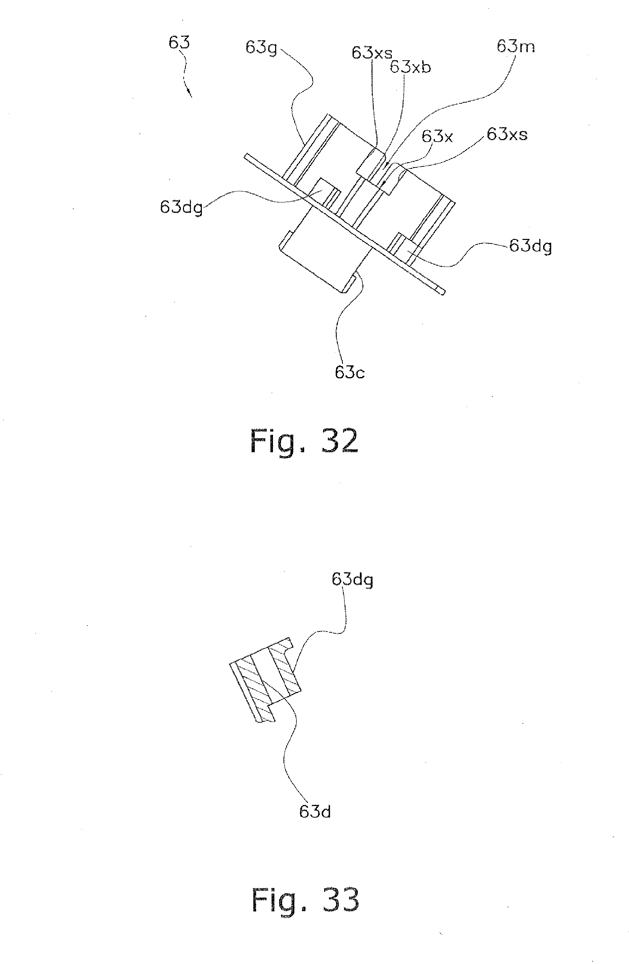

The bobbin lids 63, 64 are described in detail hereinafter. Sectional views of the first bobbin lid 63 that correspond to the cross-sections shown in FIGS. 13 and 14 are shown in FIGS. 28 through 33. FIG. 28 is a sectional view along line A-A of the first bobbin lid 63. FIG. 29 is a sectional view along line B-B of the first bobbin lid 63. FIG. 30 is a side view showing the first bobbin lid 63 from the direction of the arrow C. FIG. 31 is a side view showing the first bobbin lid 63 from the direction of the line D. FIG. 32 is a side view showing the first bobbin lid 63 from the direction of the arrow E. FIG. 33 is a sectional view along line F-F of the first bobbin lid 63. The second bobbin lid 64 has the same shape as the first bobbin lid 63, and therefore will not be described. The parts of the second bobbin lid 64 correspond to the parts of the first bobbin lid 63, the reference numeral 64 being substituted in the reference numerals for each member.

As shown in FIGS. 28 and 29, the first bobbin lid 63 has on the bottom side thereof a bobbin cylinder top part 63g formed so as to extend in a cylindrical shape, in order to insert and fit into the bobbin main body 65 by being positioned on the inside of the bobbin main body 65.

In the bobbin cylinder top part 63g, a guide groove 63j for holding the first main body upper protrusion 65j of the bobbin main body 65 in the thickness direction of the first main body upper protrusion 65j and guiding the first main body upper protrusion 65j to a predetermined position in the insertion direction is formed in the vicinity of the substantially T-shaped hook-shaped part 63a, as shown in the side view of FIG. 30 from the direction of the arrow C. The guide groove 63j has guiding side surfaces 63js formed facing each other so as to hold the first main body upper protrusion 65j in the thickness direction thereof. The guide groove 63j also has a contacting bottom part 63jb for coming in contact with the inserted distal end portion of the first main body upper protrusion 65j and fixing the positional relationship in the insertion direction.

In the bobbin cylinder top part 63g, as shown overlapping with the guide groove 63j in the depth direction in FIG. 30, a guide groove 63k for holding the second main body upper protrusion 65k of the bobbin main body 65 in the thickness direction and guiding the second main body upper protrusion 65k to a predetermined position in the insertion direction is formed at the opposite position substantially 180 degrees counterclockwise from the guide groove 63j. The guide groove 63k has guiding side surfaces 63ks formed facing each other so as to hold the second main body upper protrusion 65k in the thickness direction thereof. The guide groove 63k also has a contacting bottom part 63kb for coming in contact with the inserted distal end portion of the second main body upper protrusion 65k and fixing the positional relationship in the insertion direction.

In the bobbin cylinder top part 63g, as shown in the side view of FIG. 31 from the direction of the arrow D, a guide groove for holding the third main body upper protrusion 65m of the bobbin main body 65 in the thickness direction and guiding the third main body upper protrusion 65m to a predetermined position in the insertion direction is formed at a position substantially 90 degrees counterclockwise from the guide groove 63j as viewed from the top, the guide groove 63j being provided in the vicinity of the substantially T-shaped hook-shaped part 63a. The guide groove 63m has guiding side surfaces 63ms formed facing each other so as to hold the third main body upper protrusion 65m in the thickness direction thereof. The guide groove 63m also has a contacting bottom part 63mb for coming in contact with the inserted distal end portion of the third main body upper protrusion 65m and fixing the positional relationship in the insertion direction.

In the bobbin cylinder top part 63g, as shown in the side view of FIG. 32 from the direction of the arrow E, a thermistor attachment groove 63x is formed at a position substantially 90 degrees clockwise from the guide groove 63j as viewed from the top. The thermistor attachment groove 63x is provided with a shape for attaching the thermistor 14. The thermistor attachment groove 63x has thermistor attachment side surfaces 63xs formed facing each other so as to hold the thermistor 14 in the thickness direction thereof. The thermistor attachment groove 63x also has a spring contacting bottom part 63xb for directing a spring for pushing the thermistor 14 against the external surface of the accumulator tube F.

As shown in the sectional view in FIG. 33 of the first bobbin lid 63 along line F-F, the first bobbin lid 63 has screwing projections 63dg for screwing the first through fourth ferrite cases 71 through 74 via the screws 69. The screwing projections 63dg are protrusions provided so as to extend in the axial direction in order to maintain the width in the screw advancement direction of the screw holes 63d. The screw holes 63d for the screws 69 are screw holes which pass through in the axial direction in the screwing projections 63dg.

### <1-6> Fitting of the Bobbin Main Body 65 and the Bobbin Lids 63, 64

The first bobbin lid 63 and the bobbin main body 65 fit together at the top of the bobbin main body 65. The first main body upper protrusion 65j of the bobbin main body 65 herein fits in the guide groove 63j of the first bobbin lid 63. In other words, the first main body upper protrusion 65j is inserted in a state of being held by the guiding side surfaces 63js in the thickness direction of the first main body upper protrusion 65j, and the positional relationship in the insertion direction is fixed by contact with the contacting bottom part 63jb by the inserted distal end portion of the first main body upper protrusion 65j. In the same manner, the second main body upper protrusion 65k of the bobbin main body 65 fits in the guide groove 63k of the first bobbin lid 63. The third main body upper protrusion 65m of the bobbin main body 65 fits in the guide groove 63m of the first bobbin lid 63.

The first bobbin lid 63 and the bobbin main body 65 can fit together in a state in which the first bobbin lid 63 and bobbin main body 65 are positioned and angled relative to each other so that the first main body upper protrusion 65j fits in the guide groove 63j, the second main body upper protrusion 65k fits in the guide groove 63k, and the third main body upper protrusion 65m fits in the guide groove 63m. In a state in which the relative positions and angles are not in alignment, the first through third main body upper protrusions 65j, 65k, 65m are not guided into the guide grooves 63j, 63k, 63m, and come in contact with other surrounding portions. The first bobbin lid 63 and the bobbin main body 65 are therefore configured so as to fit together only at predetermined relative positions and relative angles.

The second bobbin lid 64 and bobbin main body 65 described above fit together at the bottom of the bobbin main body 65.

The second bobbin lid 64 and the bobbin main body 65 can fit together in a state in which the second bobbin lid 64 and bobbin main body 65 are positioned and angled relative to each other so that the thermistor protrusion 65n fits in the thermistor attachment groove 64x, the fuse protrusion 65p fits in a guide groove 64j, the first main body lower protrusion 65q fits in the guide groove 64j, and the second main body lower protrusion 65r fits in the guide groove 64k. In a state in which the relative positions and angles are not in alignment, the thermistor protrusion 65n, fuse protrusion 65p, first main body lower protrusion 65q, and second main body lower protrusion 65r are not guided into the thermistor attachment groove 64x and the guide grooves 64j, 64k, 64m, and come in contact with other surrounding portions. The second bobbin lid 64 and the bobbin main body 65 are therefore configured so as to fit together only at predetermined relative positions and relative angles.

### <1-7> Attachment of the Thermistor 14 and the Fuse 15

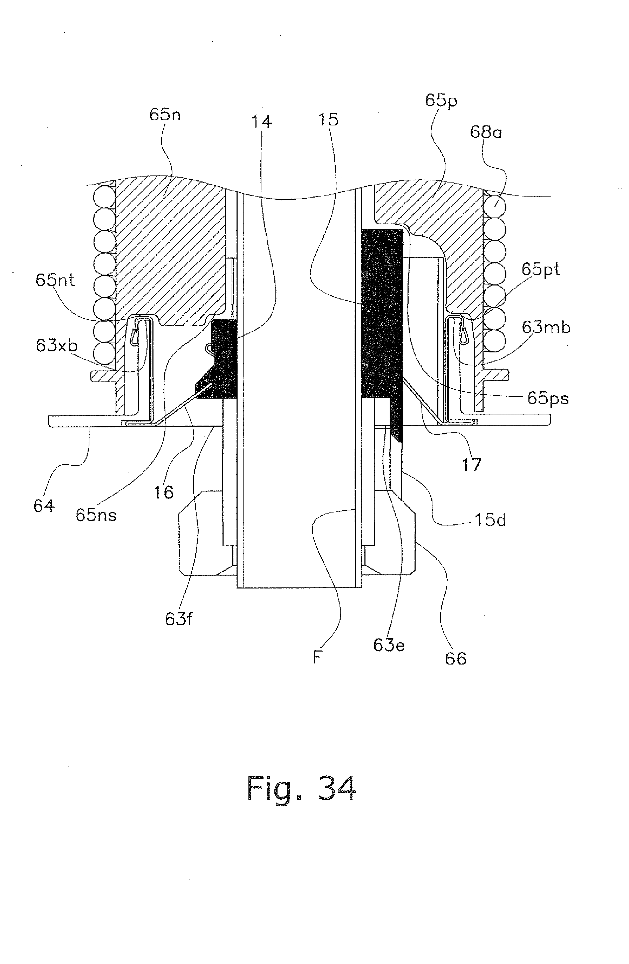

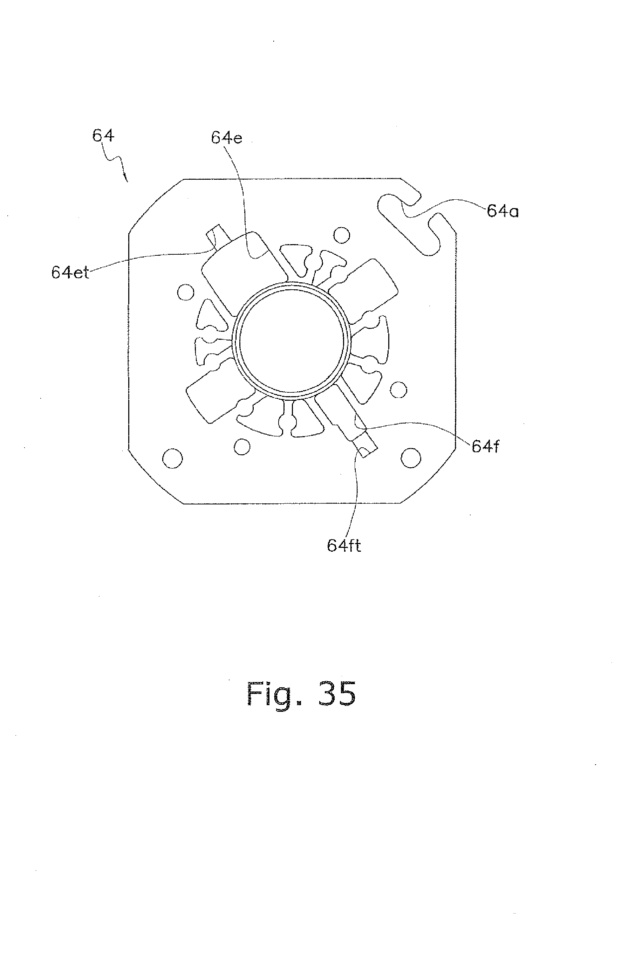

FIG. 34 is a rough sectional view showing the vicinity of the lower end part of the electromagnetic induction heating unit 6. FIG. 35 is a bottom view showing the second bobbin lid 64.

These drawings show the general state in which the thermistor 14 and the fuse 15 are attached from below in a state in which the second bobbin lid 64 and the bobbin main body 65 are fit together.

The relative angles of the bobbin main body 65 and second bobbin lid 64 are set by the fitting of the thermistor protrusion 65n of the bobbin main body 65 into the thermistor attachment groove 64x. The relative angles of the bobbin main body 65 and the second bobbin lid 64 are also set by the fitting of the fuse protrusion 65p of the bobbin main body 65 into the guide groove 64j.

In the state in which the second bobbin lid 64 and the bobbin main body 65 are thus fit together, the thermistor 14 is inserted upward from the bottom in the axial direction of the accumulator tube F through a thermistor insertion opening 64f and attached. The fuse 15 is also inserted upward from the bottom in the axial direction of the accumulator tube F through a fuse insertion opening 64e and attached.

The shape of the thermistor insertion opening 64f on the inside in the radial direction of the accumulator tube F conforms to the outer edge shape of the thermistor 14 as viewed in the insertion direction. The outer edge shape of the thermistor 14 as viewed in the insertion direction is such that when the thermistor 14 is rotated about the insertion direction as the axial direction, the same outer edge shape exists only at the same rotation angle. The person attaching the thermistor 14 can therefore reliably place the thermistor 14 in a state in which the thermistor detector 14a thereof is pressed against the external surface of the accumulator tube F, and can install the thermistor 14 without error in the placement thereof. The surface shape of the thermistor detector 14a of the thermistor 14 also has the same degree of curvature as the external surface of the accumulator tube F, and the surface area of contact can be increased.

The shape of the fuse insertion opening 64e on the inside in the radial direction of the accumulator tube F also conforms to the outer edge shape of the fuse 15 as viewed in the insertion direction. The outer edge shape of the fuse 15 as viewed in the insertion direction is such that when the fuse 15 is rotated about the insertion direction as the axial direction, the same outer edge shape exists only at the same rotation angle. The person attaching the fuse 15 can therefore reliably place the fuse 15 in a state in which the fuse detector 15a thereof is pressed against the external surface of the accumulator tube F, and can install the fuse 15 without error in the placement thereof. The surface shape of the fuse detector 15a of the fuse 15 also has the same degree of curvature as the external surface of the accumulator tube F, and the surface area of contact can be increased.

The thermistor protrusion 65n for setting the relative angles of the bobbin main body 65 and the second bobbin lid 64 also has the function of determining the position of the thermistor 14 in the axial direction of the accumulator tube F. Specifically, as shown in FIG. 34, the thermistor 14 is attached by insertion from below, parallel to the axial direction of the accumulator tube F. During insertion, the distal end portion in the insertion direction of the thermistor 14 comes in contact with the thermistor contacting surface 65ns of the thermistor protrusion 65n, and the position of the thermistor 14 in the insertion direction can be fixed.

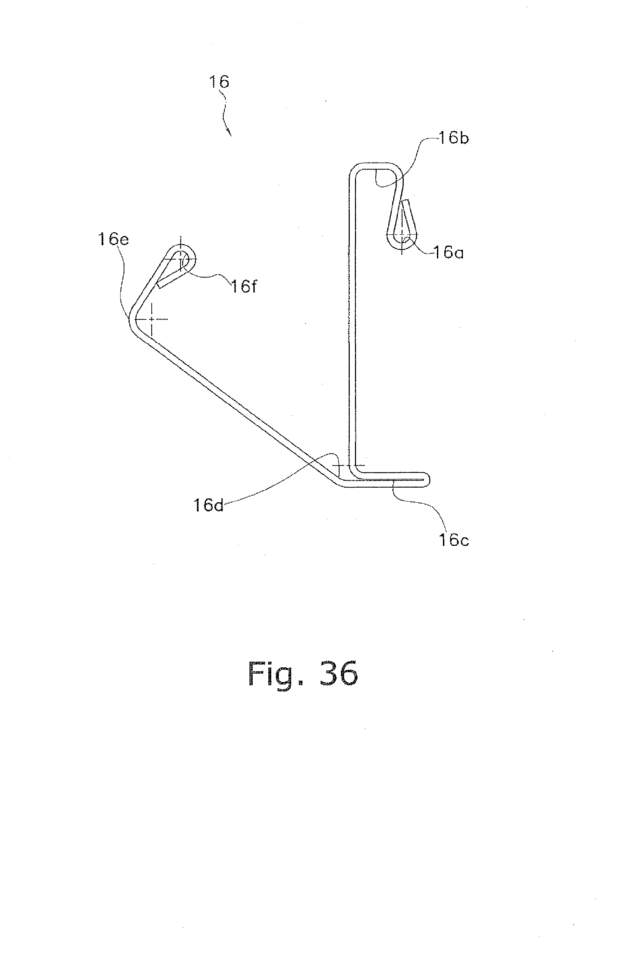

The position of the thermistor 14 in the radial direction of the accumulator tube F is determined by a thermistor attachment spring 16 such as the one shown in FIG. 36. The thermistor attachment spring 16 has a fixed-side end part 16a, an action-side end part 16f, a first fixed part 16b, a second fixed part 16c, an elastic deforming part 16d, and an action part 16e. Among these parts, the fixed-side end part 16a, the first fixed part 16b, the second fixed part 16c, and the elastic deforming part 16d are positioned at a thermistor attachment spring fixing part 64ft which is a space in the thermistor insertion opening 64f on the outside thereof in the radial direction of the accumulator tube F, as shown in FIG. 35. The action-side end part 16f and the action part 16e are positioned in the thermistor insertion opening 64f on the inside thereof in the radial direction of the accumulator tube F.

The fixed-side end part 16a and the action-side end part 16f each have a folded-back shape at the end parts thereof. The first fixed part 16b holds the portion near the top end of the spring contacting bottom part 64xb in the thermistor attachment groove 64x of the second bobbin lid 64 in the radial direction of the accumulator tube F, and is thereby fixed to the second bobbin lid 64. The second fixed part 16c also holds across the spring contacting bottom part 64xb and the bottom side of the second bobbin lid 64 in the axial direction of the accumulator tube F, in cooperation with the first fixed part 16b, and is thereby fixed to the second bobbin lid 64. The spring contacting bottom part 64xb in the thermistor attachment groove 64x of the second bobbin lid 64, and the thermistor spring contacting surface 65nt in the thermistor protrusion 65n of the bobbin main body 65 also hold the thermistor attachment spring 16 from the axial direction of the accumulator tube F, and thereby set the position in the axial direction of the accumulator tube F. The action part 16e and action-side end part 16f in front of the elastic deforming part 16d form a free end supported by the elastic deforming part 16d. The elastic deforming part 16d thereby elastically deforms so as to be pushed to the outside in the radial direction of the accumulator tube F, whereby the thermistor 14 is forced on the external surface of the accumulator tube F, and adhesion can be enhanced.

The fuse protrusion 65p for setting the relative angles of the bobbin main body 65 and the second bobbin lid 64 also has the function of setting the position of the fuse 15 in the axial direction of the accumulator tube F. Specifically, as shown in FIG. 34, the fuse 15 is attached by insertion from below, parallel to the axial direction of the accumulator tube F. During insertion, the distal end portion in the insertion direction of the fuse 15 comes in contact with the fuse contacting surface 65ps of the fuse protrusion 65p, and the position of the fuse 15 in the insertion direction can be fixed.

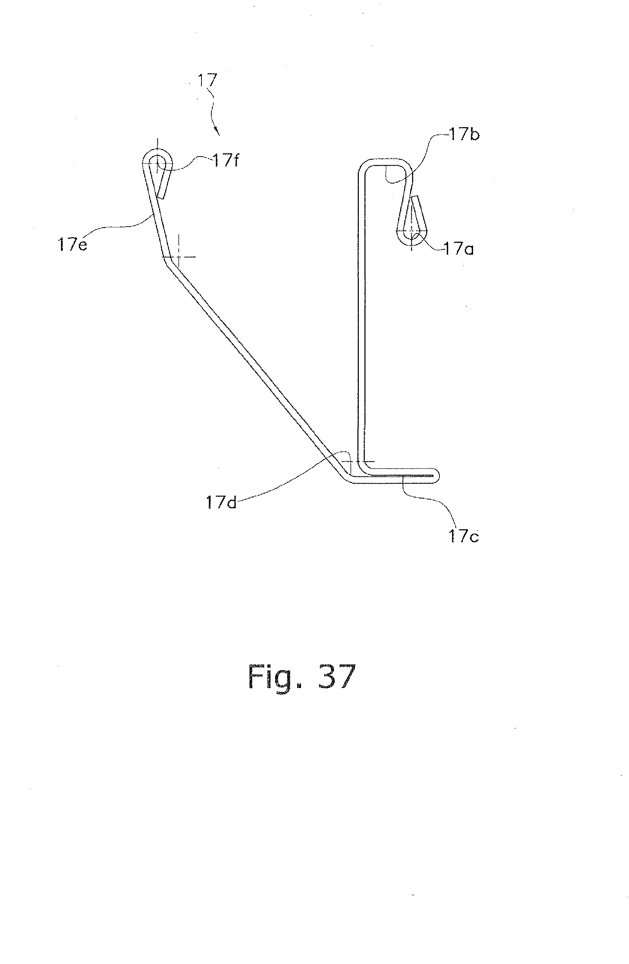

The position of the fuse 15 in the radial direction of the accumulator tube F is determined by a fuse attachment spring 17 such as the one shown in FIG. 37. The fuse attachment spring 17 has a fixed-side end part 17a, an action-side end part 17f, a first fixed part 17b, a second fixed part 17c, an elastic deforming part 17d, and an action part 17e. Among these parts, the fixed-side end part 17a, the first fixed part 17b, the second fixed part 17c, and the elastic deforming part 17d are positioned at a fuse attachment spring fixing part 64et which is a space in the fuse insertion opening 64e on the outside thereof in the radial direction of the accumulator tube F, as shown in FIG. 35. The action-side end part 17f and the action part 17e are positioned in the fuse insertion opening 64e on the inside thereof in the radial direction of the accumulator tube F.

The fixed-side end part 17a and the action-side end part 17f each have a folded-back shape at the end parts thereof. The first fixed part 17b holds the portion near the top end of the contacting bottom part 64mb in the guide groove 64m of the second bobbin lid 64 in the radial direction of the accumulator tube F, and is thereby fixed to the second bobbin lid 64. The second fixed part 17c also holds across the contacting bottom part 64mb and the bottom side of the second bobbin lid 64 in the axial direction of the accumulator tube F, in cooperation with the first fixed part 17b, and is thereby fixed to the second bobbin lid 64. The contacting bottom part 64mb in the guide groove 64m of the second bobbin lid 64, and the fuse contacting surface 65pt in the fuse protrusion 65p of the bobbin main body 65 also hold the fuse attachment spring 17 from the axial direction of the accumulator tube F, and thereby set the position in the axial direction of the accumulator tube F. The action part 17e and action-side end part 17f in front of the elastic deforming part 17d form a free end supported by the elastic deforming part 17d. The elastic deforming part 17d thereby elastically deforms so as to be pushed to the outside in the radial direction of the accumulator tube F, whereby the fuse 15 is forced on the external surface of the accumulator tube F, and adhesion can be enhanced.

A state of good contact of the thermistor 14 and the fuse 15 with the external surface of the accumulator tube F can thereby be ensured, and responsiveness can be enhanced.

### <1-8> Retention of the Coil 68

In the state in which the bobbin main body 65 and the first bobbin lid 63 are fit together, the first coil retaining part 65b of the bobbin main body 65 and the substantially T-shaped hook-shaped part 63a of the first bobbin lid 63 are positioned in the same direction in the peripheral direction of the accumulator tube F.

The coil retaining groove 65c and coil retaining groove 65d of the first coil retaining part 65b of the bobbin main body 65 are thereby positioned so as to be covered from the outside in the radial direction by the hook-shaped part 63a of the first bobbin lid 63, as viewed from the top. The space surrounded by the coil retaining groove 65c and the hook-shaped part 63a, and the space surrounded by the coil retaining groove 65d and the hook-shaped part 63a are thereby provided so as to extend in the axial direction of the accumulator tube F as viewed from the top.

The coil first portion 68b and the coil second portion 68c are retained so as to pass through the respective spaces. The coil first portion 68b and the coil second portion 68c are held at two locations by the hook-shaped part 63a and the coil retaining groove 65c or coil retaining groove 65d. Tension on the coil 68 can therefore be dispersed relative to a case in which the coil 68 is retained at one location. Breakage and other effects due to friction on the coil 68 are thereby prevented, and the reliability of the device can be enhanced.

The retained coil first portion 68b and coil second portion 68c are each wired so as to extend upward in the axial direction of the accumulator tube F.

### <1-9> Binding Band Retention of the Thermistor Wires 14d and the Fuse Wires 15d

In the state in which the bobbin main body 65 and the second bobbin lid 64 are fit together, the second coil retaining part 65e of the bobbin main body 65 and the substantially T-shaped hook-shaped part 64a of the second bobbin lid 64 are positioned in the same direction in the peripheral direction of the accumulator tube F.

The coil retaining groove 65f and coil retaining groove 65g of the second coil retaining part 65e of the bobbin main body 65 are thereby positioned so as to be covered from the outside in the radial direction by the hook-shaped part 64a of the second bobbin lid 64, as viewed from the top. The space surrounded by the coil retaining groove 65f and the hook-shaped part 64a, and the space surrounded by the coil retaining groove 65g and the hook-shaped part 64a are thereby provided so as to extend in the axial direction of the accumulator tube F as viewed from the top.

A configuration may be adopted in which a portion of a binding band (not shown) is placed through each space in the axial direction of the accumulator tube F so as to bind the thermistor wires 14d and the fuse wires 15d.

The tension placed on the thermistor wires 14d and the fuse wires 15d can thereby be reduced, the thermistor wires 14d and fuse wires 15d can be prevented from being pulled out, and the reliability of the device can be enhanced.

The retained thermistor wires 14d and fuse wires 15d are each wired so as to extend downward in the axial direction of the accumulator tube F, in the direction opposite the direction in which the wiring of the coil first portion 68b and coil second portion 68c extends.

### <Features of the Air Conditioning Apparatus 1 of the Present Embodiment>

Since the thermistor detector 14a has substantially the same shape as the contacted portion of the external surface of the accumulator tube F, a state of good contact can be maintained. Furthermore, the adhesion of the thermistor 14 to the accumulator tube F can be enhanced by the thermistor attachment spring 16. Since the fuse detector 15a also has substantially the same shape as the contacted portion of the external surface of the accumulator tube F, a state of good contact can be maintained. Furthermore, the adhesion of the fuse 15 to the accumulator tube F can be enhanced by the fuse attachment spring 17. The responsiveness of the thermistor 14 and the fuse 15 can thereby be enhanced.

In particular, when the accumulator tube F is heated by electromagnetic induction heating, temperature variations sometimes occur that are more rapid than the rate at which the refrigerant temperature changes during simple air conditioning operation. It is therefore extremely effective to employ a structure such as described above, in which there is good adhesion in the thermistor 14 and fuse 15 of the electromagnetic induction heating unit 6, to enhance the response characteristics.

In this electromagnetic induction heating unit 6, since the refrigerant flows through the inside of the accumulator tube F in which heat is evolved by induction by the electrically powered coil 68, the refrigerant temperature tends to be higher on the downstream side than the upstream side. However, the thermistor 14 and the fuse 15 are in direct contact with the external surface of the accumulator tube F at a point on the downstream side in the refrigerant flow direction of the portion of the accumulator tube F to which the electromagnetic induction heating unit 6 is attached. The degree to which the refrigerant is heated by the accumulator tube F, in which heat is evolved by induction heating, can be more easily assessed than in a case in which the thermistor and fuse are disposed in direct contact with the external surface on the upstream side. Excessive heating of the refrigerant that flows through the accumulator tube F can thereby be easily detected, and the electromagnetic induction heating unit 6 can be more reliably protected from abnormal temperature increases.

The thermistor wires 14d and the fuse wires 15d communicate information by using only extremely low-current electrical signals, in comparison with the high-frequency current fed to the coil 68, and are therefore low-current components. A high-frequency current of 3-phase 200 V or higher, for example, is fed to the coil 68 for electromagnetic induction heating, and the coil 68 is therefore a high-current component. However, in the electromagnetic induction heating unit 6 described above, the wiring of the coil first portion 68b and coil second portion 68c, and the thermistor wires 14d and fuse wires 15d extend in substantially opposite directions in the axial direction. Furthermore, the coil 68 extends further upward from the top of the electromagnetic induction heating unit 6, and the thermistor wires 14d and fuse wires 15d extend further downward from the bottom of the electromagnetic induction heating unit 6. The low-current thermistor wires 14d and fuse wires 15d are therefore not prone to be affected by the high-frequency current that flows through the high-current coil 68. Detection errors in the thermistor 14 and fuse 15 due to noise and other effects caused by the current flowing through the coil 68 can thereby be prevented, and the reliability of the device can be enhanced.

Since the coil first portion 68b and the coil second portion 68c are brought together at one location in the vicinity of the top end of the electromagnetic induction heating unit 6, effects on the periphery of the electromagnetic induction heating unit 6 can be kept to a minimum in comparison with a case in which the coil first portion 68b and the coil second portion 68c pass through various locations.

### <Other Embodiments>

Embodiments of the present invention are described above with reference to the drawings, but the specific configuration is not limited to these embodiments, and can be changed within a range that does not deviate from the scope of the invention.

### (A)

An example is described in the embodiment above in which the surface of the thermistor 14 or fuse 15 in contact with the accumulator tube F is made to conform to the shape of the external surface of the accumulator tube F.

However, the present invention is not limited to this configuration.

For example, a configuration may be adopted in which a thermistor or fuse is selected which has excellent detection sensitivity and a high degree of freedom in the shape thereof, and the shape of the surface of the refrigerant tube is adapted to the shape of the detector of the thermistor or fuse.

### (B)

In the above embodiment, a case is described in which the electromagnetic induction heating unit 6 is attached to the accumulator tube F in the refrigerant circuit 10.

However, the present invention is not limited to this configuration.

For example, the electromagnetic induction heating unit 6 may be provided to a refrigerant tube other than the accumulator tube F. In this case, the SUS tubing F2 or another magnetic material is provided in the portion of the refrigerant tube to which the electromagnetic induction heating unit 6 is provided.

### (C)

In the above embodiment, a case is described in which the accumulator tube F is composed of a two-layer tubing structure of copper tubing F1 and SUS tubing F2.

However, the present embodiment is not limited to this configuration.

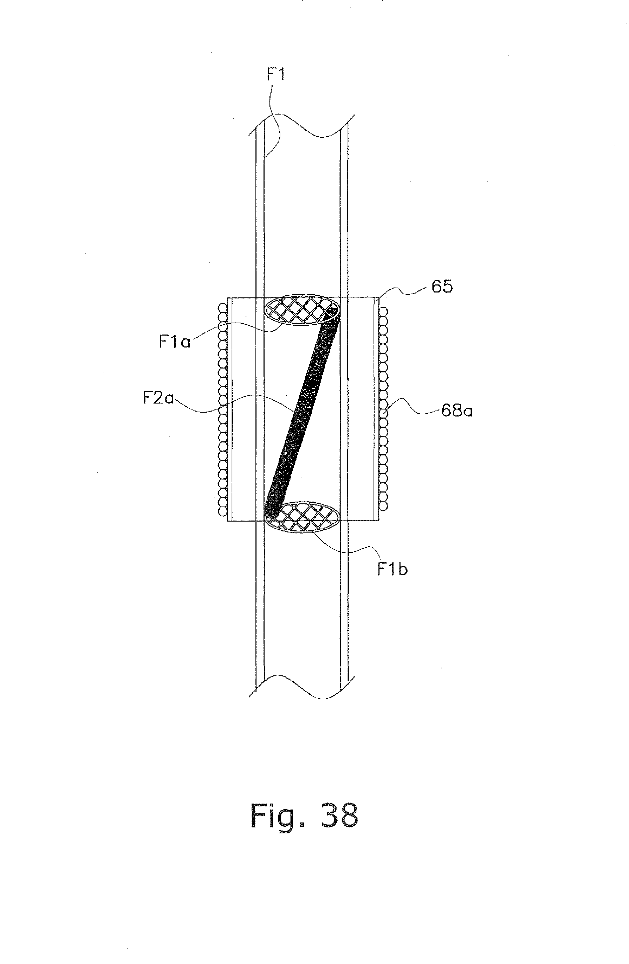

For example, a heated member F2a and two stoppers F1a may be disposed inside the accumulator tube F or a refrigerant tube that is to be heated, as shown in FIG. 38. In this arrangement, the heated member F2a includes a magnetic material, and is a member in which heat is evolved by the electromagnetic induction heating of the embodiment described above. The stoppers F1a in two locations inside the copper tubing F1 allow the refrigerant to pass through during normal operation, but do not allow the heated member F2a to pass through. The heated member F2a is thereby prevented from moving even when the refrigerant is flowing. It is therefore possible to heat the accumulator tube F or another desired heating position. Since the refrigerant and the heated member F2a in which heat is evolved are also in direct contact, the efficiency of heat transfer can be enhanced.

### (D)

The heated member F2a described in the other embodiment (C) above may also be fixed in position with respect to the tube without the use of the stoppers F1a.

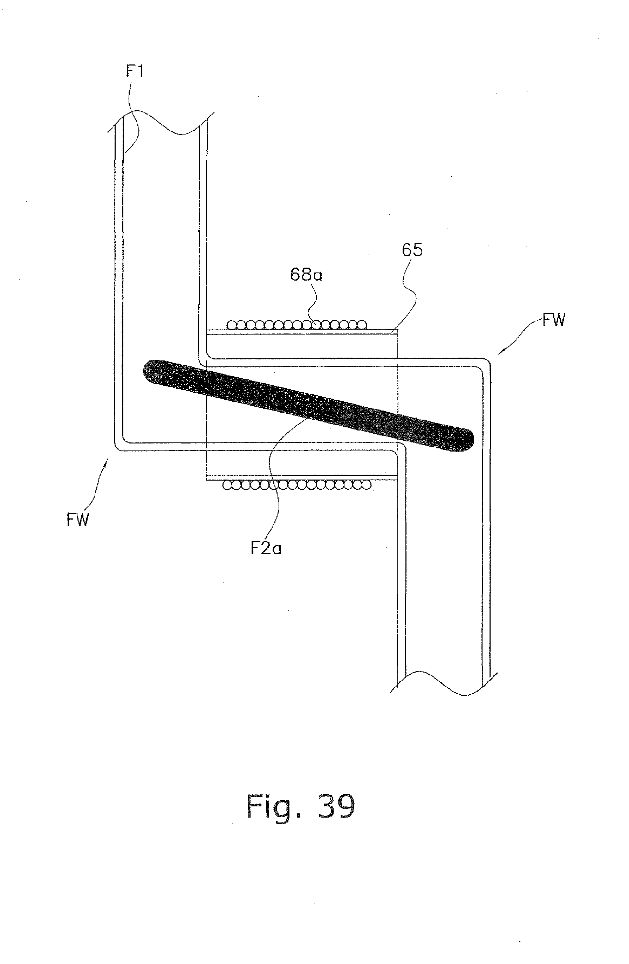

For example, a configuration may be adopted in which bent portions FW are provided in two locations in the copper tubing F1, and the heated member F2a is disposed inside the copper tubing F1 between the two bent portions FW, as shown in FIG. 39. Movement of the heated member F2a can then be suppressed while the refrigerant is allowed to pass through.

### (E)

In the above embodiment, a case is described in which the coil 68 is wound in helical fashion around accumulator tube F.

However, the present invention is not limited to this configuration.

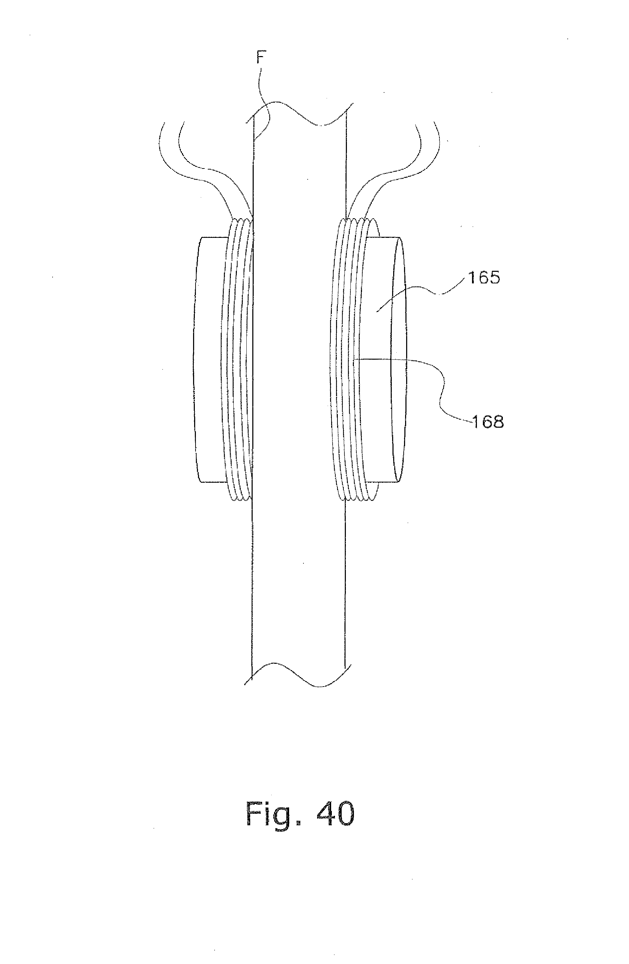

For example, a configuration may be adopted in which a coil 168 wound around a bobbin main body 165 is disposed on the periphery of the accumulator tube F rather than being wound around the accumulator tube F, as shown in FIG. 40. In this arrangement, the bobbin main body 165 is disposed so that the axial direction thereof is substantially perpendicular to the axial direction of the accumulator tube F. The bobbin main body 165 and the coil 168 are also divided into two parts disposed on either side of the accumulator tube F.

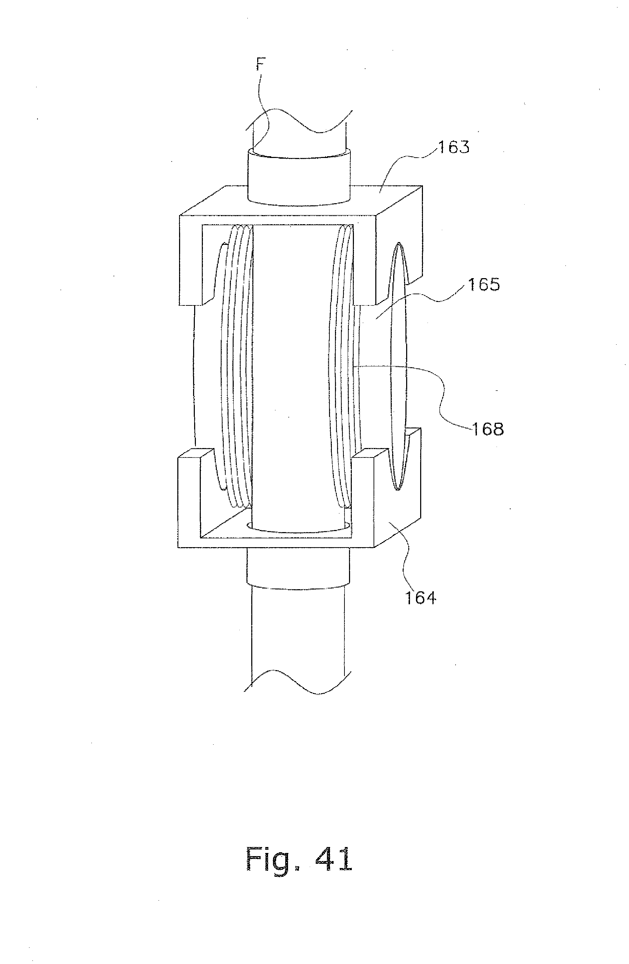

In this case, a first bobbin lid 163 and a second bobbin lid 164 through which the accumulator tube F passes may be disposed so as to fit together with the bobbin main body 165, for example, as shown in FIG. 41.

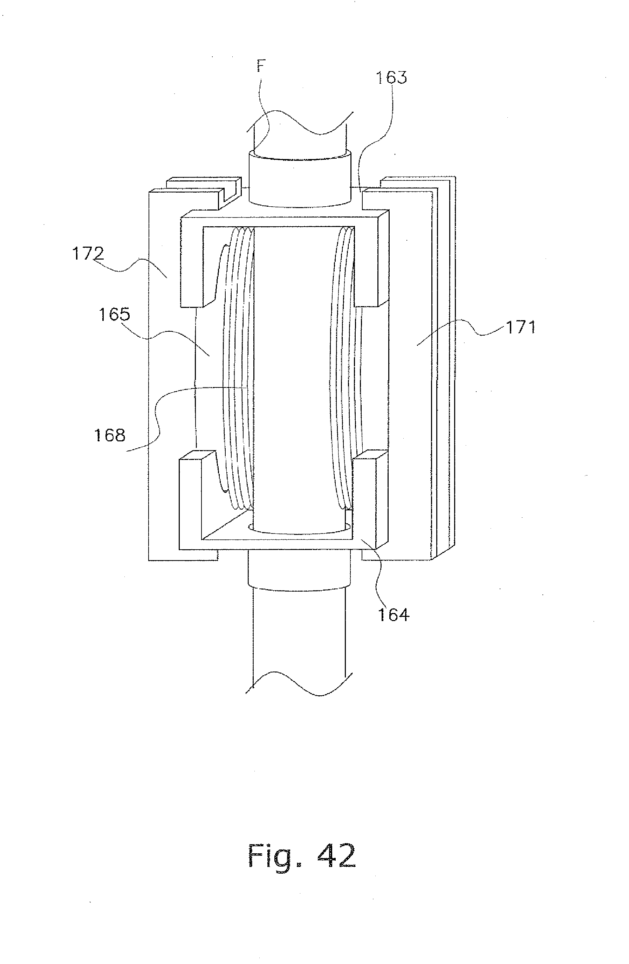

The first bobbin lid 163 and second bobbin lid 164 may also be held fixed by a first ferrite case 171 and a second ferrite case 172, as shown in FIG. 42. In FIG. 42, a configuration is shown in which two ferrite cases are disposed so as to hold the accumulator tube F from the sides thereof, but ferrite cases may also be provided on four sides, in the same manner as in the embodiment described above. The ferrite may also be accommodated in a housing in the same manner as in the embodiment described above.

### INDUSTRIAL APPLICABILITY

Through the use of the present invention, the responsiveness of temperature detection can be enhanced even when the temperature of the refrigerant tube varies sharply in electromagnetic induction heating. The present invention is therefore useful particularly in an electromagnetic induction heating unit and air conditioning apparatus in which electromagnetic induction is used to heat a refrigerant.

### REFERENCE SIGNS LIST

- 1: air conditioning apparatus
- 6: electromagnetic induction heating unit
- 10: refrigerant circuit (refrigeration cycle)
- 14: thermistor (tube temperature detector)
- 14d: thermistor wires (temperature detection wires)
- 15: fuse (temperature fuse, tube temperature detector)
- 15d: fuse wires (temperature detection wires)
- 16: thermistor attachment spring (elastic member)
- 17: fuse attachment spring (elastic member)
- 21: compressor
- 22: four-way switching valve
- 23: outdoor heat exchanger
- 24: motor-driven expansion valve
- 25: accumulator
- 41: indoor heat exchanger
- 61: first hexagonal nut (positioning part)
- 62: C-ring (positioning part)
- 63: first bobbin lid (positioning part)
- 64: second bobbin lid (positioning part)
- 64e: fuse insertion opening (insertion opening)
- 64f: thermistor insertion opening (insertion opening)
- 65: bobbin main body
- 66: second hexagonal nut
- 68: coil
- 68b: coil first portion (coil extension wire)
- 68c: coil second portion (coil extension wire)
- 71: first ferrite case
- 72: second ferrite case
- 73: third ferrite case
- 74: fourth ferrite case
- 75: screen cover
- 98: first ferrite
- 99: second ferrite
- A: discharge tube, refrigerant tube
- B: indoor-side gas tube, refrigerant tube
- C: indoor-side liquid tube
- D: indoor-side liquid tube
- E: outdoor-side gas tube, refrigerant tube
- F: accumulator tube, refrigerant tube
- G: intake tube, refrigerant tube
- H: hot-gas bypass circuit
- J: juncture tubes

### CITATION LIST

### PATENT LITERATURE

### <Patent Citation 1>

Japanese Unexamined Patent Application Publication No. 8-210720

## Claims

1. An electromagnetic induction heating unit (6) for heating at least one of a refrigerant tube (F) and a member which makes thermal contact with a refrigerant that flows through said refrigerant tube (F); said electromagnetic induction heating unit (6) comprising:
a coil (68) disposed in a vicinity of said refrigerant tube (F); and
a tube temperature detector (14, 15) in contact with an external surface of said refrigerant tube (F),
a surface of the tube temperature detector (14, 15) in contact with said refrigerant tube (F) having substantially the same shape as a contacted portion of the external surface of said refrigerant tube (F).

2. The electromagnetic induction heating unit (6) according to claim 1, wherein
said coil (68) is wound around at least a portion of said refrigerant tube (F).

3. The electromagnetic induction heating unit (6) according to claim 1 or 2, further comprising:
elastic members (16, 17) for elastically deforming and thereby creating a state in which a force is applied in a direction in which said tube temperature detector (14, 15) and said refrigerant tube (F) approach each other.

4. The electromagnetic induction heating unit (6) according to any of claims 1 through 3, wherein
said tube temperature detector (14, 15) has temperature detection wires (14d, 15d) for transmitting the detected temperature;
said coil (68) has coil extension wires (68b, 68c) extending in a direction away from said refrigerant tube (F), the coil extension wires (68b, 68c) being portions other than the portion of the coil (68) that is disposed in the vicinity of said refrigerant tube (F); and
said temperature detection wires (14d, 15d) and said coil extension wires (68b, 68c) are disposed apart from each other along a direction in which said refrigerant tube (F) extends.

5. The electromagnetic induction heating unit (6) according to claim 4, wherein
said coil extension wires (68b, 68c) have
a coil first portion (68b) which is a portion extending from one end of said coil (68), and
a coil second portion (68c) which is a portion extending from an other end of said coil (68); and
a portion of said coil first portion (68b) and a portion of said coil second portion (68c) are brought together at a position in a vicinity of one side of said coil (68) in the direction in which said refrigerant tube (F) extends.

6. The electromagnetic induction heating unit (6) according to any of claims 1 through 5, further comprising:
a positioning part (61, 62, 64) for fixing the relative position of said coil (68) and
said refrigerant tube (F); wherein
said positioning part (64) has at least one insertion opening (64f, 64e) into which said tube temperature detector (14, 15) is inserted;
the shape of said tube temperature detector (14, 15) as viewed in an insertion direction thereof is predetermined shape which is not the same at any rotation angle when rotated about the insertion direction as the axial direction; and
said insertion opening (64f, 64e) is shaped so as to conform to outer edge of said predetermined shape.

7. The electromagnetic induction heating unit (6) according to any of claims 1 through 6, wherein
said tube temperature detector (14) is a thermistor (14) for transmitting the detected temperature.

8. The electromagnetic induction heating unit (6) according to claim 7, further comprising:
A controller (11, 18) for at least controlling the amount of power fed to said coil (68) based on the temperature detected by said thermistor (14).

9. The electromagnetic induction heating unit (6) according to claim 7 or 8, wherein
said thermistor (14) is in contact with the external surface of said refrigerant tube (F) at a point downstream from a center position in the width of said coil (68) along a refrigerant flow direction of said refrigerant tube (F).

10. The electromagnetic induction heating unit (6) according to any of claims 1 through 9, wherein
said tube temperature detector (14) has a temperature fuse (15) for transmitting a signal when detected temperature is equal to or higher than a predetermined temperature.

11. An air conditioning apparatus (1) comprising:
the electromagnetic induction heating unit (6) according to any of claims 1 through 10; and
a refrigeration cycle (10) that includes a portion for leading refrigerant to said refrigerant tube (F).
